# EUROPEAN PATENT APPLICATION

(11) **EP 1 271 383 A2**
(43) Date of publication of application: **02.01.2003**
(21) Application number: 02254531.3
(22) Date of filing: 27.06.2002
(51) Int. Cl.: G06F 17/60

(54) **A guidance information supply system**

(30) Priority: 27.06.2001 JP 2001195111; 23.07.2001 JP 2001222133
(71) Applicant: Seiko Epson Corporation, Shinjuku-ku, Tokyo 163-0811 (JP)
(72) Inventor: Hosaka, Toshiyuki, C/o Seiko Epson Corporation, Suwa-shi, Nagano-ken 392-8502 (JP)
(74) Representative: Finnie, Peter John

(57) **Abstract**

A guidance information supply system (10) comprises mobile terminals (11 to 13), a computer (32) for acceptance for accepting identification information outputted using a radio wave therefrom, acceptance information accumulation means (51) for accumulating the identification information and guidance information supply means (42) for supplying guidance information to the mobile terminals (11 to 13), an image display device (36) and a projection system (37), all of which are available to a user, based on the accumulated identification information. When the user operates the mobile terminals (11 to 13) to output an ID, a server supplies various guidance information to the user and therefore, the user is able to obtain the guidance information indicative of items of services the user requests without submitting a consultation ticket, whereby the system is able to provide comfortable environment in which the user easily enjoy services.

## Description

### Field of the Invention

The present invention relates to a guidance information supply system for supplying guidance information to a user by utilizing at least one display device that is installed within a management area, a guidance information supply method applied to the above-stated system and a customer management system for supplying a service to a customer by managing past store-utilization records corresponding to the customer who is registered as a member, a customer management method applied to the above-stated system, and a program for making a computer implement the above-stated methods.

### Background to the Invention

Conventionally, when a user is going to enjoy a service within a management area such as a hospital and a bank, in general, the user first submits his/her consultation ticket to a front counter or receives a numbered ticket and then, sits waiting in a waiting room until he/she receives a call from a window.

However, when the user is going to enjoy a plurality of kinds of services, for example, in a case where the user is in a hospital as a management area, he/she has to bring a plurality of kinds of consultation tickets corresponding to individual sections such as an internal medicine and an orthopedic surgery with him/her and in addition, in a case where the user is in a bank as a management area, he/she has to receive a plurality of kinds of numbered tickets corresponding to individual services to be supplied with respect to debt, deposit or the like with him/her. Accordingly, it has been found that there are problems associated with the above-stated system for supplying services and the user cannot easily enjoy satisfactory services under such insufficient circumstances.

Furthermore, also in a store such as a product delivery agent or a catering establishment, the following services are supplied. That is, the store gets a customer who has spent money in the store to register himself/herself as a member of store and issues a member card to the customer, and then, records service points on the member card every time when the customer spends money for goods. Thereafter, when the service points recorded on the member card has reached a predetermined score, a discount service or the like is supplied to the customer to stimulate him/her to spend more money for goods in the store, thereby enhancing its ability to pull in more customers.

In more detail, the member card is used as a card of the type employed to stamp a specific number of seals or the like or the type employed to record corresponding information on an electronic card in proportion to an amount of money spent by the customer, and those cards are basically configured to write store-utilization records on the card itself.

Furthermore, the services supplied through such conventional member card are employed in many stores and the store employing such services is able to make the degree of service supplied by the store slightly different from that observed in other stores. However, the services supplied by such stores fundamentally cannot be differentiated from one another and therefore, in a case where a store is going to employ a new system to clearly differentiate its services from those supplied by other stores, such a conventional system for supplying services is insufficient.

Moreover, since store-utilization records have to be written on a customer's card itself, a customer who utilizes a store employing such a conventional system is required to bring member cards corresponding to the individual stores, in which the customer spends money for goods, with him/her and in the event the customer has lost or left behind his/her card, previously registering himself/herself as a member of store cannot contribute to accumulating the store-utilization records on the card, thereby preventing the customer from enjoying the services supplied by the store.

### Summary of the Invention

According to a first aspect of the present invention, there is provided a guidance information supply system for supplying guidance information to a user by utilizing at least one display device installed within a management area, the system comprising a mobile terminal held by the user for outputting identification information for identifying the user by using a radio wave, acceptance means for accepting the identification information outputted using a radio wave from the mobile terminal held by the user, accepted information accumulation means for accumulating the identification information accepted by the acceptance means and guidance information supply means for supplying guidance information to be delivered to the user to the at least one display device based on the identification information accumulated in the accepted information accumulation means by using a radio wave.

It should be noted that the display device is realized by employing an image display device, a multi-media information display device or the like, in more detail, a CRT (Cathode-Ray Tube) display, a liquid crystal display, a PDP (Plasma Display Panel) or a projection system for forming a projected image on a screen, a wall face or a window.

In addition, the mobile terminal is realized by employing a portable radio receiver such as a portable telephone, a PHS (Personal Handy-phone System) or a pocket bell (NTT DOCOMO), or a PDA (Personal Digital Assistant) with the addition of a function of communication with other devices via a radio wave communication. Furthermore, the identification information outputted from the mobile terminal includes a phone number and/or an email address provided to the mobile terminal, and a code inherent to the mobile terminal held by the user.

Additionally, a method for outputting associated information from the mobile terminal to the acceptance means by using a radio wave may be realized by employing a method for directly communicating information between the mobile terminal and the acceptance means, or by employing a method for outputting information from the mobile terminal to the acceptance means via a communication line for a portable telephone or the like.

According to the first aspect of the present invention, when a user operates the mobile terminal to output identification information therefrom to the acceptance means, guidance information available to a user is supplied to the display device based on the accumulated information accepted by the acceptance means and therefore, the user is not required to submit his/her consultation ticket to a front counter or take a numbered ticket, eliminating elaborate operation by a user and thus, allowing a user to easily enjoy a service under such beneficial environment.

Furthermore, constructing a guidance information supply system in accordance with the first aspect of the present invention by utilizing a mobile terminal typified such as by a portable telephone that has already been widely used in the world makes it possible to install the system at a lower cost.

Preferably, the guidance information supply system constructed in accordance with the first aspect of the present invention further comprises location information collection means for collecting location information indicative of location of the mobile terminal held by the user, in which a plurality of the display devices are installed in the management area and the guidance information supply means includes: a display device selection section for selecting at least one display device from the plurality of the display devices to make the at least one display device deliver the guidance information; and a delivery information output section for delivering the guidance information to the at least one display device selected by the display device selection section.

The system constructed as described above makes it possible to deliver the guidance information to be supplied to the user to the display device disposed in the vicinity of the user, thereby allowing the user to more securely receive the guidance information.

In the guidance information supply system constructed in accordance with the first aspect of the present invention, the guidance information transmitted to the specific display device is preferably guidance instruction information to guide the user to move from a location of the display device to a predetermined location.

The system constructed as described above allows a user to move from the location of the display device in accordance with the guidance instruction information displayed on the display device to a predetermined location, for example, a location where a desired service is being supplied, without getting lost.

In particular, for example, an arrow indicating "turn to the right at the next corner =>" is employed as guidance instruction information and in addition, when such an indication is displayed large on the display device, even a small child or an amblyopic person is able to clearly view the guidance instruction information and thereby reach the desired location easily.

Preferably, the guidance information supply system according to the first aspect of the present invention is further constructed such that the guidance information supply means has a delivery information output section therein for delivering the guidance information to the mobile terminal held by the user and the mobile terminal has notification means therein for notifying the user of acquisition of the guidance information outputted from the delivery information output section.

It should be noted that the notification means is realized by employing images, sound, vibration, light or the like, or a combination of those and the notification means previously incorporated into a mobile terminal such as a portable telephone may be employed in the invented system.

Since the system constructed as described above makes it possible to deliver the guidance information not only to the display device but to the mobile terminal held by the user and further, force the user to detect reception of the information having been delivered, even in a case where the user is positioned apart from the display device or in a zone that cannot be reached from the display device, the user is able to securely obtain the guidance information. This construction allows the user to securely feel that the guidance information is being supplied to the user even in a case where the spacing between the image display devices is made long, thereby enabling to reduce the number of image display devices to be disposed and construct the guidance information supply system at a lower cost.

In addition, since the notification means notifies the user of transmission of the guidance information to the mobile terminal, for example, an amblyopic person can be informed via sound, and a vision- or hearing-impaired person or a sleeping person can be informed via vibration, thereby allowing the user to securely be informed of the guidance information.

Preferably, the guidance information supply system according to the first aspect of the present invention is further constructed such that the guidance information supply means is configured to again deliver guidance information to the mobile terminal held by the user and further, deliver guidance information to nearly all of the plurality of the display devices in the event the user has not responded to the guidance information transmitted to the mobile terminal.

As described above, in the event the user does not detect the guidance information transmitted to the mobile terminal, the guidance information is again delivered to the mobile terminal and further, the guidance information is delivered to nearly all of the image display devices, and therefore, the user is forced to detect the guidance information having been delivered to the user via both the mobile terminal and the display device, thereby allowing the user to more securely receive the guidance information.

Preferably, the guidance information supply system according to the first aspect of the present invention is further constructed such that the guidance information transmitted to the mobile terminal is a schedule for the user and available within the management area.

As described above, since the system supplies to the user information indicative of the schedule for the user and available within the management area, the user is able to efficiently use his/her waiting time in accordance with the schedule.

Preferably, the guidance information supply system according to the first aspect of the present invention further comprises user information accumulation means for accumulating personal information about the user, in which the user information accumulation means has a guidance information preparation section therein for searching the user information accumulation means to find personal information about the user having the identification information based on the identification information accepted by the acceptance means and preparing guidance information to be transmitted to the display device and/or the mobile terminal based on the found personal information.

In the system constructed as described above, when the acceptance means accepts the identification information outputted from the mobile terminal held by the user, personal data associated with the user is found in the user information accumulation means as a result of the search by the section. Furthermore, preparing the guidance information to be supplied to the user based on the found personal data makes it possible to supply guidance information suitably prepared for individual users to the user.

Preferably, the guidance information supply system according to the first aspect of the present invention is further constructed such that the acceptance means has a service selection operation section therein available to the user for selecting an item of a service to be received by the user within the management area and the guidance information preparation section prepares guidance information to be transmitted to the display device and/or the mobile terminal based on the item of a service selected by the user through the service selection operation section.

As described above, when the acceptance means accepts the identification information outputted from the mobile terminal held by the user and the user selects an item of a service the user requests by operating the service selection operation section, the guidance information indicative of contents of the service the user requests is supplied to the user, thereby allowing the user to obtain the useful guidance information.

Moreover, the above-described guidance information supply system of the present invention can be configured as a method for supplying guidance information and as a program for implementing the method, and therefore the user is able to benefit from the action and effects derived from the method and program and similar to those observed in the above described system. In addition, the system of the present invention can be constructed by employing a general-purpose computer and display, thereby increasing its versatility to a large extent.

According to a second aspect of the present invention, there is provided a customer management system for managing a service such as the above-described point service to be supplied to a customer by utilizing a mobile terminal capable of outputting identification information inherent to the customer by using a radio wave without utilizing a member card issued by each store.

In this aspect of the present invention, we provide a customer management system, through which stores able to position itself apart from other stores and enhance its ability to pull in more customers, and further a customer is not required to bring cards or the like corresponding to individual stores with him/her, a customer management method applied to the system and a program for directing a computer to implement the customer management method.

In more detail, a customer management system according to the second aspect of the present invention for supplying a service to a customer by managing store-utilization records corresponding to the customer registered as a member of store, comprises identification information acceptance means for accepting identification information for identifying the customer and outputted using a radio wave from a mobile terminal held by the customer, utilization records collection means for collecting store-utilization records corresponding to the customer accepted by the identification information acceptance means and utilization records accumulation means for accumulating the store-utilization records corresponding to the identification information for identifying the customer.

The above-described mobile terminal is realized by employing a portable radio transmitter/receiver such as a portable telephone, a PHS (Personal Handy-phone System) or a bi-directional pager, or a PDA (Personal Digital Assistant) with the addition of a function of communication with other devices via a radio wave communication. Furthermore, an inherent code such as a phone number and/or an email address given to the mobile terminal held by the user can be utilized as the identification information outputted using a radio wave from the mobile terminal. That is, it should be appreciated that any mobile terminal, which is able to output identification information inherent to the customer who holds the mobile terminal by using a radio wave and further, communicate with other devices, can be employed.

Moreover, the present invention can be configured as a network system constructed by connecting mobile terminals, store-side terminals and servers via a network. In this case, although the network system can be configured as a client server system that utilizes a wireless LAN installed within a specific store, instead, it may be constructed by performing communication between a mobile terminal and a server by utilizing a public wireless network that is applied to communication such as by a portable telephone and through the Internet or the like.

Additionally, it should be appreciated that the above-described store-utilization records collected by the utilization records collection means includes not only purchase records of items or the like a customer has purchased but all information that enables the store to comprehend a store-usage trend observed in such events indicating stay time during which the customer has been staying within the store and the number of frequencies at which the customer visited the store. Note that in a case where the store collects the purchase records of items or the like, the collection by the store may be made by connecting registers within the store and a server together via a network and then, collecting purchase information included in the registers and inputted by a clerk at the time of purchase of items.

According to the present invention constructed as described above, when the customer holding the mobile terminal purchases items and the like within the store, the identification information acceptance means accepts the identification information inherent to the customer and the utilization records collection means collects the store-utilization records such as prices of items the customer has purchased, and thus, the utilization records collection means can accumulate the store-utilization records corresponding to the identification information for identifying the customer.

This construction of the invention makes it possible for individual stores to collect and accumulate the store-utilization records corresponding to the customer without issuing member cards corresponding to the individual stores and supply various services suitable for individual customers, thereby positioning the individual stores apart from other stores.

At the same time, since the store-utilization records corresponding to the customer can be accumulated with respect to the individual stores when the customer purchases items and the like, the customer is required to only bring the mobile terminal with him/her, allowing the customer to securely enjoy services supplied by the store.

In order to perform the above-described operations, the guidance information supply system according to the first aspect of the present invention preferably further comprises point calculation means for calculating service points corresponding to the customer based on the store-utilization records corresponding to the customer and point accumulation means for accumulating the service points calculated by the point calculation means.

As described above, the system having the point calculation means and point accumulation means therein makes it possible to supply services to the customer by accumulating service points corresponding to the customer, which operation has been performed in a conventional system, without issuing a member card to the customer, thereby improving convenience of the customer and allowing the store to further enhance its ability to pull in more customers.

Furthermore, in a case where the above-stated customer management system has entrance/exit detection means for detecting each of events indicating the customer has entered and exited from a store therein, the point calculation means preferably is further configured to calculate service points in proportion to stay time between two events indicating the customer enters and then exits from a store.

It should be noted that the entrance/exit detection means can be configured as a part of a reception terminal that receives identification information for identifying the mobile terminal held by the customer and in more detail, in a case where the system employs the above-stated client server, the means can be constructed by making the store-side terminal installed within the store have such a function of reception of identification information.

According to the system constructed as described above, since the point calculation means can perform addition of service points in proportion to the time during which the customer stays utilizing the store, in a case where the store has a parking lot or the like installed therein, the store is able to supply a service in such a manner that associated parking fee is made free by offsetting service points accumulated during the utilization of store against points corresponding to the fee, thereby allowing the store to position itself apart from other stores and further enhance its ability to pull in more customers.

Preferably, the above-described customer management system further comprises location information collection means for collecting location information indicative of location of the mobile terminal held by the customer and guidance information supply means for supplying guidance information to the mobile terminal held by the customer based on the location information indicative of location of the mobile terminal and collected by the location information collection means.

It should be noted that although the location information collection means can collect the location information indicative of location of the mobile terminal via a Global Positioning System available for communication through a public wireless network that is applied to communication by a portable telephone, a PHS, and/or the like, in a case where the mobile terminal has a function included in the GPS, the means can collect the location information by using the mobile terminal independent of the Global Positioning System utilizing the public network.

The system having the location information collection means and guidance information supply means therein as described above makes it possible to timely supply guidance information to the individual customers registered as a member of store, thereby allowing for increase in frequency of store-utilization by the customer.

That is, the store previously obtains the location information indicative of location of the customer registered as a member of store via the location information collection means and when the customer comes in the vicinity of the store, the store supplies guidance information suitable for and corresponding to the customer via the guidance information supply means, thereby allowing the store to prompt the customer to enter the store.

Moreover in a case where the above-described customer management system further has personal information generation means therein for generating personal information about the customer corresponding to the identification information based on information indicative of the store-utilization records accumulated in the utilization records accumulation means, the guidance information supply means preferably generates the guidance information based on the personal information about the customer generated by the personal information generation means and then, supplies the same to the customer.

It should be appreciated that the personal information about the customer means information about the customer's hobbies/preferences and the like obtained from a consumption trend observed with respect to the customer and prepared based on information about the customer at the time of member registration made within the store and/or the store-utilization records corresponding to the customer.

This construction of the system makes it possible to supply guidance information that just covers the customer's hobbies/preferences to the specific customer who is specified by the location information collection means. For instance, a store such as a book store employing the invented system previously obtains a purchase history of books purchased by a customer from the usage information accumulation means and predicts books that meet the customer's preferences, and when a corresponding new book is received by the store, the store can timely supply information indicative of arrival of the book to the customer who is visiting the store, thereby allowing the store to further enhance its ability to pull in more customers.

In addition, according to the system constructed as described above, information that does not meet the customer's hobbies/preferences is never supplied to the customer and the customer never misses his/her desired information.

Furthermore, in a case where the above-described customer management system further has at least one display device installed within the store and adapted to display the guidance information, the guidance information supply means preferably is configured to direct at least one of the at least one display device to display the guidance information.

It should be noted that the display device may be realized by employing an image display device such as a CRT, liquid crystal display or a projection type projector.

Additionally, in a case where the guidance information supply means delivers the guidance information to the display device, the means preferably is configured to specify a customer holding the mobile terminal based on the identification information for identifying the mobile terminal and then, direct the display device to display the guidance information.

As described above, since the guidance information supply means is configured to direct the display device to display the guidance information, when the guidance information has been delivered to the mobile terminal, even information, which is difficult for the customer to understand, can clearly be displayed on a large screen of the display device, thereby allowing the store to further prompt customers to enter the store and enhance its ability to pull in more customers.

Furthermore, since the guidance information supply means specifies a customer holding the mobile terminal provided with the guidance information and then, directs the display device to display the guidance information, the customer can easily understand which contents are addressed to one of associated customers at a glance and further, feel an affinity with the store to a larger extent, thereby increasing frequency of store-utilization by the customer.

Additionally, the above-described customer management system of the present invention can be configured as a customer management method for managing customers and as a program for directing a computer to implement the method, and therefore the customer is able to benefit from the action and effects derived from the method and program and similar to those observed in the above described customer management system.

It should be noted that although procedures employed in the customer management method can be performed by the same computer, the procedures may individually be performed by corresponding different computers and/or a part of any one of the procedures may be performed by a computer different from the computer applied to the remaining part of the any one of the procedures.

Moreover, in a case where the present invention is configured as a program capable of running on a computer, a system employing the present invention may be constructed by employing a general-purpose computer as a server, and therefore, the present invention enhances its versatility.

### Brief Description of the Drawings

Examples of the present invention will now be described with reference to the accompanying drawings, in which:
FIG. 1 illustrates the general configuration of a guidance information supply system constructed in accordance with a first embodiment of the present invention;
FIG. 2 illustrates a block diagram of the configuration of a server employed in the first embodiment of the present invention;
FIG. 3 illustrates the construction of a table constituting accepted information accumulation means employed in the first embodiment of the present invention;
FIG. 4 illustrates the construction of a table constituting user information accumulation means employed in the first embodiment of the present invention;
FIG. 5 illustrates the construction of a table constituting appointment information accumulation means employed in the first embodiment of the present invention;
FIG. 6 illustrates the construction of a table constituting supplier-side schedule accumulation means employed in the first embodiment of the present invention;
FIG. 7 illustrates the construction of a table constituting user-side schedule accumulation means employed in the first embodiment of the present invention;
FIG. 8 illustrates the construction of a table constituting display program accumulation means employed in the first embodiment of the present invention;
FIG. 9 illustrates the construction of a table constituting guidance instruction information accumulation means employed in the first embodiment of the present invention;
FIG. 10 is a flow chart illustrating a procedure for accepting identification information, employed in the first embodiment of the present invention;
FIG. 11 is a flow chart illustrating a procedure for preparing time schedule, which procedure is employed in the first embodiment of the present invention;
FIG. 12 illustrates a screen available to a user for inputting an item of a service the user requests and displayed on a monitor of a terminal computer for acceptance, which screen is employed in the first embodiment of the present invention;
FIG. 13 illustrates a user-side schedule screen displayed on a display part of a mobile terminal, which screen is employed in the first embodiment of the present invention;
FIG. 14 is a flow chart illustrating a procedure for preparing and delivering a display program, which procedure is employed in the first embodiment of the present invention;
FIG. 15 illustrates a call screen displayed on a display part of a mobile terminal, which screen is employed in the first embodiment of the present invention;
FIG. 16 is a flow chart illustrating a procedure for preparing and delivering guidance instruction information, which procedure is employed in the first embodiment of the present invention;
FIG. 17 illustrates a guidance screen displayed on an image display device, which screen is employed in the first embodiment of the present invention;
FIG. 18 is a schematic diagram illustrating the general configuration of a customer management system constructed in accordance with a second embodiment of the present invention;
FIG. 19 illustrates a block diagram of the configuration of a store-side terminal employed in the second embodiment of the present invention;
FIG. 20 is a conceptual diagram illustrating the configuration of utilization records accumulation means employed in the second embodiment of the present invention;
FIG. 21 is a conceptual diagram illustrating the configuration of member information accumulation means employed in the second embodiment of the present invention;
FIG. 22 is a conceptual diagram illustrating the configuration of point accumulation means employed in the second embodiment of the present invention;
FIG. 23 illustrates a block diagram of the configuration of a server employed in the second embodiment of the present invention;
FIG. 24 is a conceptual diagram illustrating the configuration of personal information accumulation means employed in the second embodiment of the present invention;
FIG. 25 is a flow chart illustrating an action of the customer management system, which action is obtained in accordance with the second embodiment of the present invention;
FIG. 26 is another flow chart illustrating an action of the customer management system, which action is obtained in accordance with the second embodiment of the present invention;
FIG. 27 is still another flow chart illustrating an action of the customer management system, which action is obtained in accordance with the second embodiment of the present invention; and
FIG. 28 illustrates a display example of an image to be displayed on an image display device in the second embodiment of the present invention;

### Detailed Description

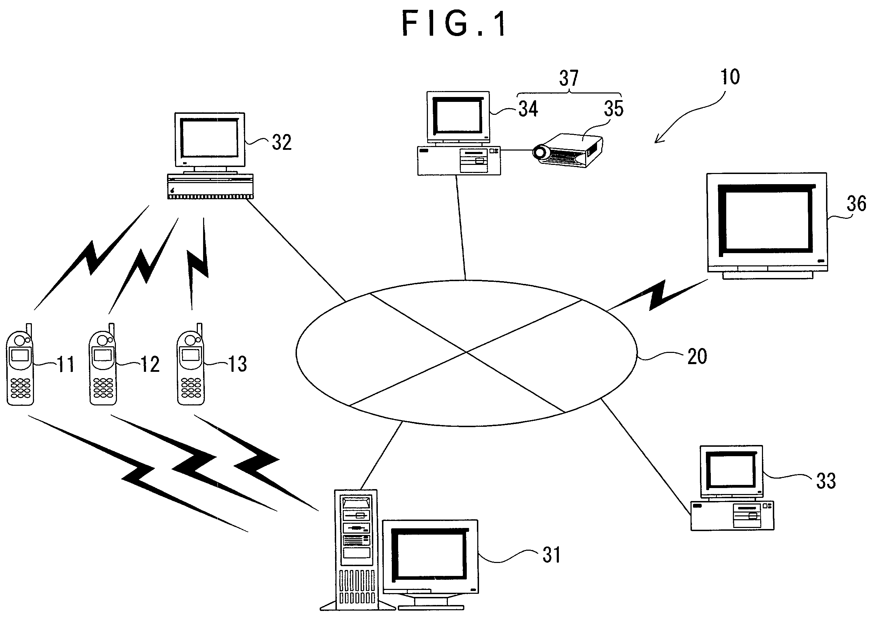

FIG. 1 illustrates a guidance information supply system 10 constructed in accordance with a first embodiment of the present invention.

The guidance information supply system 10 is utilized, for example, within a hospital as a management area to call a patient as a user or guide a patient to a predetermined location such as a roentgen room.

In more detail, the guidance information supply system 10 comprises mobile terminals 11, 12, 13, a network 20 such as a LAN (local Area Network), a server 31, a terminal computer 32 for acceptance as acceptance means, a terminal computer 33, a projection system 37 consisting of a terminal computer 34 for display and an image display device 35, and an image display device 36.

The mobile terminals 11 to 13 are constructed such that each of the mobile terminals can be connected to the server 31 and the terminal computer 32 for acceptance, both provided within the hospital, via a wireless LAN and further, can output its own ID (Identification Information) to the terminal computer 32 for acceptance via the wireless LAN.

It should be noted that the wireless LAN is preferably realized by employing a radio communication technique typified such as by Bluetooth or HomeRF (Home Radio Frequency) which utilizes a radio wave having a predetermined frequency and in a case where the wireless LAN employing such a technique is installed in the system, the mobile terminals 11 to 13 can communicate with the server 31 and the terminal computer 32 for acceptance even when any obstacle exists therebetween. The mobile terminals 11 to 13 each previously has a module capable of receiving and transmitting a radio wave having a predetermined frequency and a utility software for controlling the module incorporated therein to be able to communicate with the server 31 and the terminal computer 32 for acceptance via the wireless LAN. The module may, for example, be constructed such that the module is turned on when an operator pushes a manual operation button provided in the housing of each of the mobile terminals 11 to 13, or is turned on/off by a command issued by the utility software. Note that the module also may be a module mounted outside each of the mobile terminals 11 to 13.

Furthermore, the mobile terminals 11 to 13 each have a browsing function and are able to display the data outputted from the server 31 or the terminal computer 32 for acceptance on a display part thereof.

Moreover, the mobile terminals 11 to 13 each have notification means therein for notifying a user of reception of the data by using vibration, light, sound or the like when the mobile terminal receives the data outputted using a radio wave from the server 31 or the terminal computer 32 for acceptance via the above-stated wireless LAN.

In this embodiment, the mobile terminals 11 to 13 each are realized by employing a portable telephone configured to transmit a signal to a base station (not shown) by using a radio wave to thereby be connected to a fixed-line telephone network via the base station and individually held by a user. In addition, the mobile terminals 11 to 13 each employ a telephone number as its own ID corresponding to each of the mobile terminals.

The server 31 and the terminal computer 32 for acceptance are constructed such that the both can be connected to each other via a network 20. In addition, the server 31 and the terminal computer 32 for acceptance each also have a module and a utility software incorporated therein to be able to communicate with the mobile terminals 11 to 13 via the wireless LAN and in this case, the module is always being turned on.

The terminal computer 32 for acceptance is a computer for accepting a telephone number outputted using a radio wave from the mobile terminals 11 to 13 as an ID of each thereof.

The terminal computer 33 is configured to be able to be connected to the server 31 via the network 20.

It should be noted that the detailed configuration of the server 31 will be described later.

The terminal computer 34 for display and the image display device 35 are disposed, for example, in a waiting room or a corridor within a hospital to constitute the projection system 37. In the projection system constructed as described above, the information outputted from the server 31 is inputted to the terminal computer 34 for display via the network 20, a modem or the like and then, is displayed on a screen or the like as projected images by the image display device 35.

The image display device 36 consisting of, for example, a liquid crystal display is appropriately disposed in a waiting room or a corridor within a hospital, which construction is similar to those of the projection system 37 consisting of the above-stated terminal computer 34 for display and image display device 35.

The projection system 37 and the image display device 36 constructed as described above each are disposed in plural within a management area and in addition, though described in detail later, location information indicative of locations of those units are previously being stored within the server 31. The server 31 appropriately selects the projection system(s) 37 and/or the image display device(s) 36, to which guidance information is to be transmitted from the server, from a plurality of the projection systems 37 and/or the image display devices 36, respectively.

Subsequently, the configuration of the server 31 will be described in detail below.

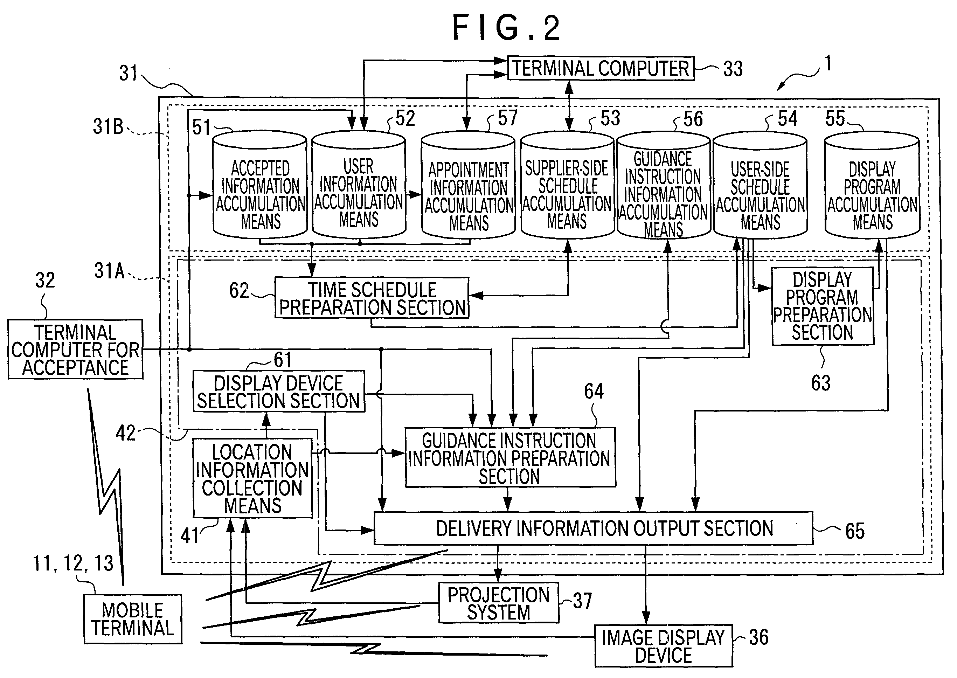

As shown in FIG. 2, the server 31 comprises: a CPU 31A; a storage device 31B; location information collection means 41 and guidance information supply means 42 each configured as a program executed by a command from the CPU 31A and run on an OS having a multi-task function; accepted information accumulation means 51, user information accumulation means 52, supplier-side schedule accumulation means 53, user-side schedule accumulation means 54, display program accumulation means 55, guidance instruction information accumulation means 56 and appointment information accumulation means 57, each provided within the storage device 31 B.

The location information collection means 41 is a section for collecting information indicative of location of each user holding associated one of the mobile terminals 11 to 13. The location information collection means 41 is constructed such that it collects information indicative of the location of a user before associated information is delivered to the user by the guidance information supply means 42 and the guidance information supply means 42 is constructed such that it delivers guidance information to the projection system 37 and the image display device 36 based on the information indicative of the location of a user collected by the location information collection means 41.

Collection of the information indicative of the location of a user by the location information collection means 41 is, for example, made as follows: mount a module capable of communicating by using a radio wave with the module provided within each of the mobile terminals 11 to 13 inside or outside the image display device 36 and/or the display device of the projection system 37; and when the mobile terminals 11 to 13 enters the radio-communication-enabled zone that can be reached using a radio wave from each of the display devices, output a signal indicating the associated mobile terminal has entered the zone from the display device covering the radio-communication-enabled zone to the location information collection means 41. In this case, the operation for outputting the signal from the display device to the location information collection means 41 may be performed via the network 20.

It should be noted that the mobile terminals 11 to 13 may be constructed such that the mobile terminals each are given a GPS (Global Positioning System) function and periodically output their own location information to the location information collection means 41 by means of a radio transmission function included in the mobile terminals 11 to 13. Or, the mobile terminals each output their own location information to the location information collection means 41 when the location information collection means 41 outputs a signal, which requires the mobile terminals 11 to 13 to output their own location information, to the mobile terminals 11 to 13.

It should be noted that radio transmission function may be realized by employing a method for directly communicating information between associated equipments Or another method for transmitting information to the server 31 via the network 20 while utilizing a line for a portable telephone or the like.

The guidance information supply means 42 comprises: a display device selection section 61, a time schedule preparation section 62, a display program preparation section 63, a guidance instruction information preparation section 64 and an delivery information output section 65. Note that the time schedule preparation section 62, display program preparation section 63 and guidance instruction information preparation section 64 constitute a guidance information preparation section of the present invention. In addition, the guidance information employed in the present invention consists of a user-side time schedule, display program (call information) and guidance instruction information. The display device selection section 61 is a section for selecting the projection system(s) 37 and/or the image display device(s) 36, to which associated guidance information is to be supplied, from a plurality of the projection systems 37 and/or the image display devices 36, respectively, based on the information indicative of the location of a user outputted from the location information collection means 41. In this embodiment, the display device selection section 61 is constructed such that it selects the projection system 37 and/or the image display device 36, which are(is) disposed in the vicinity of the location of a user, from a plurality of the projection systems 37 and/or the image display devices 36, respectively. Note that to the location information collection means 41 is inputted a signal outputted from a display device that is selected from the display devices constituting a plurality of the projection systems 37 and the image display devices 36, and further, disposed within a radio-communication-enabled zone in which the mobile terminals 11 to 13 and the display device are able to communicate with each other, and therefore, it is concluded that the display device having outputted the signal is a display device that is disposed in the vicinity of the location of a user.

The time schedule preparation section 62 is a section for preparing a time schedule for the side of a supplier (hereinafter, referred to as a supplier-side time schedule) who supplies a service made within a management area and a time schedule for the side of a user (hereinafter, referred to as a user-side time schedule) who is within a management area based on information accumulated in the accepted information accumulation means and personal information accumulation means.

The guidance information supply means 42 is constructed such that it transmits associated guidance information to the mobile terminals 11 to 13 each held by a user, the projection systems 37 and the image display devices 36 based on the supplier-side time schedule and the user-side time schedule prepared by the time schedule preparation section 62.

The display program preparation section 63 is a section for preparing a display program consisting of contents to be displayed on the display part of each of the mobile terminals 11 to 13, the projection systems 37 and image display devices 36, and further, determining the time when the display program is to be displayed and the contents to be delivered based on the user-side schedule accumulated in the user-side schedule accumulation means 54. Note that the above-stated display time is determined about 10 minutes earlier than the time when a user is to have a consultation/examination.

The guidance instruction information preparation section 64 is a section for preparing guidance instruction information to be displayed on the projection systems 37 and the image display devices 36. The guidance instruction information is prepared as follows. That is, when determinations are made as to which user-side schedule is to be accumulated in the user-side schedule accumulation means 54 and which display device is to be selected by the display device selection section 61, the guidance instruction information to be displayed on the display device that has been selected by the display device selection section 61 is retrieved from guidance information accumulated in the guidance instruction information accumulation means 56 based on the determinations.

The delivery information output section 65 is a section for transmitting associated guidance information to each of the equipments, i. e., the mobile terminals 11 to 13, the projection systems 37 and the image display devices 36, all of which can be communicated with the section 65 via the network 20 or a wireless network. In this case, the corresponding guidance information is displayed on each of the equipments.

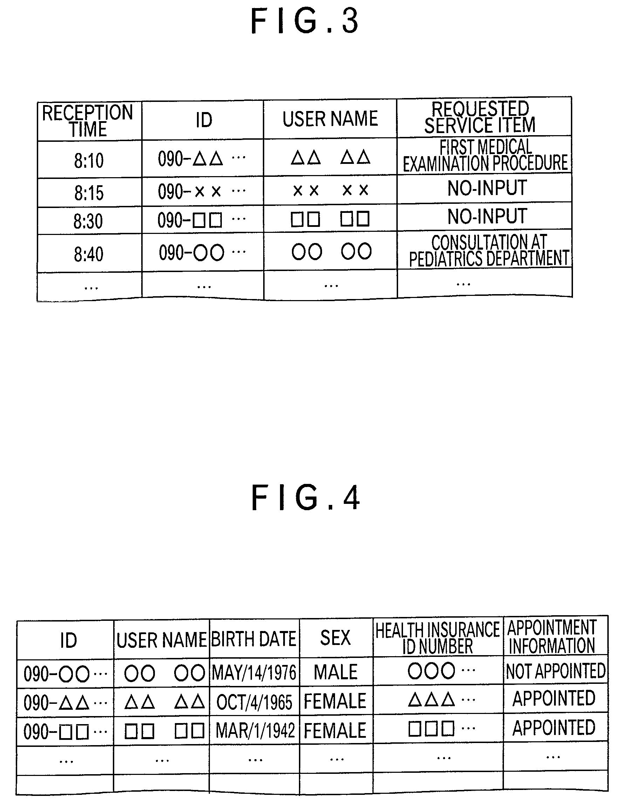

The accepted information accumulation means 51 is a section for accumulating identification information for identifying a user accepted by the terminal computer 32 for acceptance. As shown in FIG. 3, the accepted information accumulation means 51 employed in the present invention is configured as a database consisting of a table in which records are prepared with respect to individual users. Information accumulated in the table includes an ID number utilizing a phone number, an accepted time and a requested service item.

The user information accumulation means 52 is a section for accumulating personal information about each user and as shown in FIG. 4, configured as a database consisting of a table in which records corresponding to individual users are prepared. Information accumulated in the table includes an ID, birth date, sex, a health insurance ID number and appointment information, and such information is inputted through the terminal computer 33 or the like connected to the server 31 via the network 20.

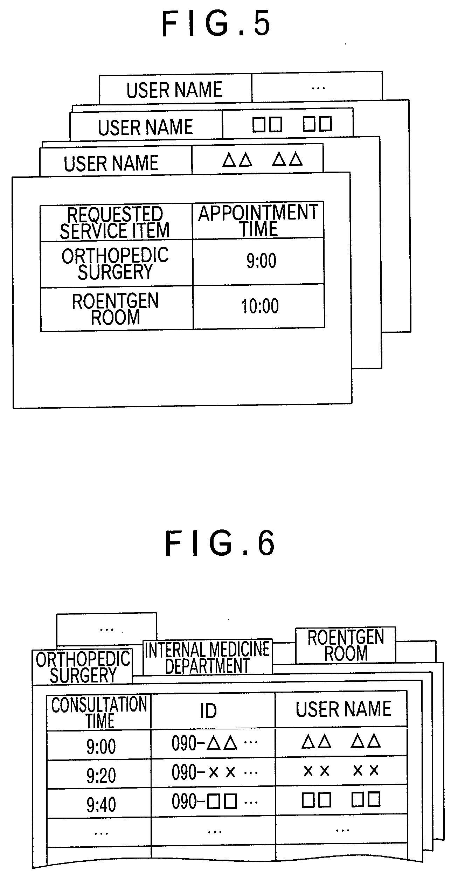

The appointment information accumulation means 57 is a section for accumulating appointment information corresponding to each user and as shown in FIG. 5, configured as a database consisting of tables corresponding to the individual users, and further, in each of the tables, records are prepared with respect to individual appointed service items. Information to be accumulated in each table includes appointment time.

The supplier-side schedule accumulation means 53 is a section for accumulating supplier-side schedule prepared by the time schedule preparation section 62 and in the embodiment, time schedules such as consultation or examination turn corresponding to individual locations such as an orthopedic surgery and a roentgen room are accumulated therein. In more detail, as shown in FIG. 6, the supplier-side schedule accumulation means 53 is configured as a database consisting of tables corresponding to the individual locations and records are prepared with respect to individual users in each table. Information accumulated in each table includes an ID and a consultation/examination time. The supplier-side schedule accumulation means 53 constructed as described above is, for example, configured to allow an associated person to change the information accumulated therein by inputting associated information via the terminal computer 33 or the like disposed in each location.

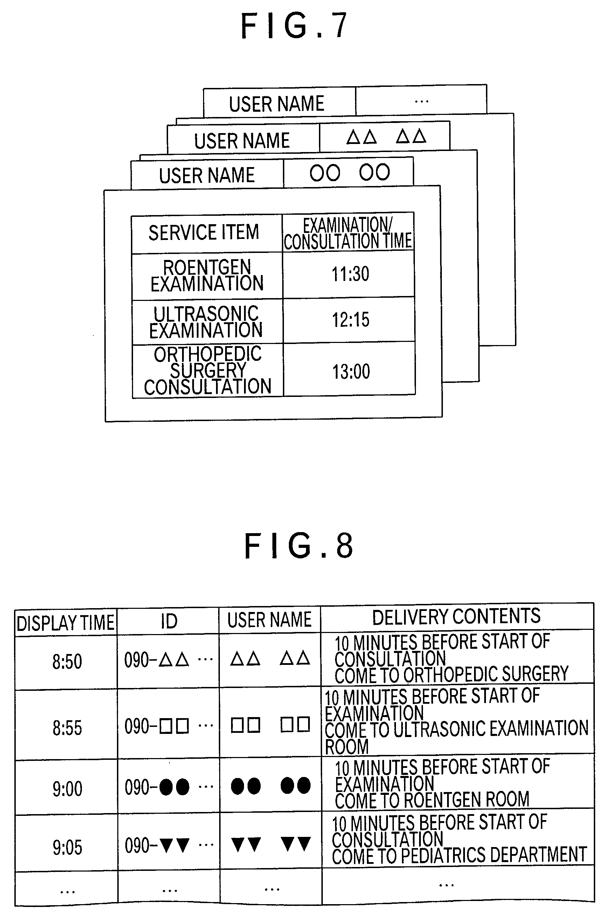

The user-side schedule accumulation means 54 is a section for accumulating user-side schedule prepared by the time schedule preparation section 62 and in the embodiment, as shown in FIG. 7, configured as a database consisting of tables corresponding to the individual users. In each table, records are prepared with respect to items of services to be supplied within the management area and information accumulated in each table includes a consultation/examination time.

The display program accumulation means 55 is a section for accumulating display programs prepared by the display program preparation section 63 and as shown in FIG. 8, configured as a database consisting of a table in which records are prepared with respect to every individual time when the associated records are to be displayed. Information accumulated in the table includes an ID, user name and delivery contents. Among such information, the delivery contents are call information to call a user out to a predetermined location and are comprised of text data.

The guidance instruction information accumulation means 56 is a section for accumulating guidance instruction information to be displayed on a plurality of the projection systems 37 and image display devices 36. The guidance instruction information is information to be displayed on the above-stated display device to guide a user to move from the location where the display device is disposed to a specific location.

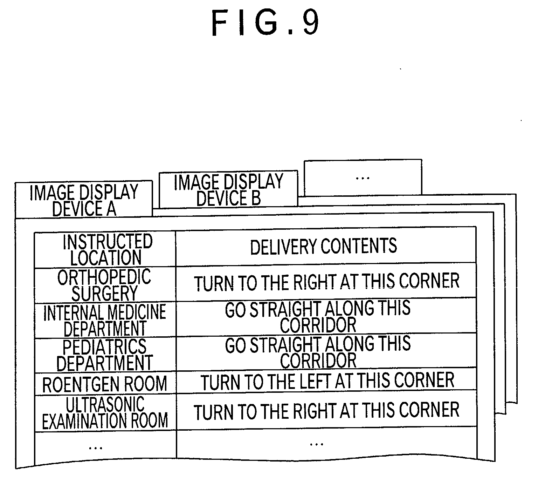

As shown in FIG. 9, the guidance instruction information accumulation means 56 is configured as a database consisting of tables corresponding to the projection systems 37 and image display devices 36, and records are prepared with respect to locations to be instructed, and information to be accumulated in each table includes delivery contents.

Operation of the guidance information supply system 10 constructed as described above will be explained below. Operation of the guidance information supply system 10 employed in the present invention can be divided into four primary operations, i. e., acceptance of identification information, preparation of time schedule, preparation and delivery of display program, and preparation and delivery of guidance instruction information. In addition, since each of the four primary operations are performed independently by utilizing an OS having a multi-task function, explanation will be made with respect to each of the primary operations.

### (1) Acceptance of identification information

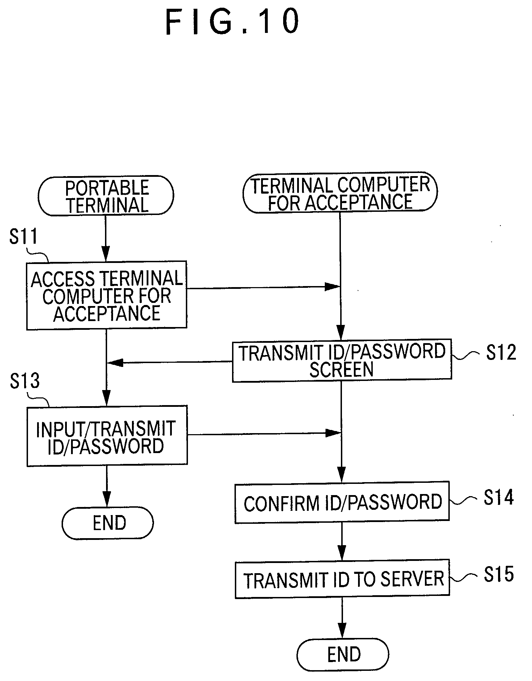

Acceptance of identification information is made in accordance with the flow chart shown in FIG. 10.

First, a user visits a hospital and when the user enters a radio-communication-enabled zone in which the user can communicate with a terminal computer 32 for acceptance, the user turns on a module provided inside each of the mobile terminals 11 to 13 to thereby access the terminal computer 32 for acceptance (processing S11).

When the user accesses the terminal computer 32 for acceptance, a screen prompting the user to input an ID and a password of the user appears on a display part of each of the mobile terminals 11 to 13 (processing S12). In accordance with the contents displayed on the screen, the user inputs his/her own ID and password (processing S13), and then, the terminal computer 32 for acceptance gets confirmation of input of each item, and further, determines whether or not the inputted ID and password are correct (processing S14). When an incorrect ID or the like is inputted, the terminal computer 32 for acceptance directs each of the mobile terminals 11 to 13 to display associated messages on the display part thereof and at the same time, the display part thereof displays a screen to prompt the user to input the ID or the like again.

On the other hand, when the terminal computer 32 for acceptance determines a correct ID or the like is inputted, it outputs the ID information to a server 31 together with an acceptance time when the user has accessed the terminal computer 32 for acceptance (processing S15: acceptance procedure).

### (2) Preparation of time schedule (a part of guidance information supply procedure)

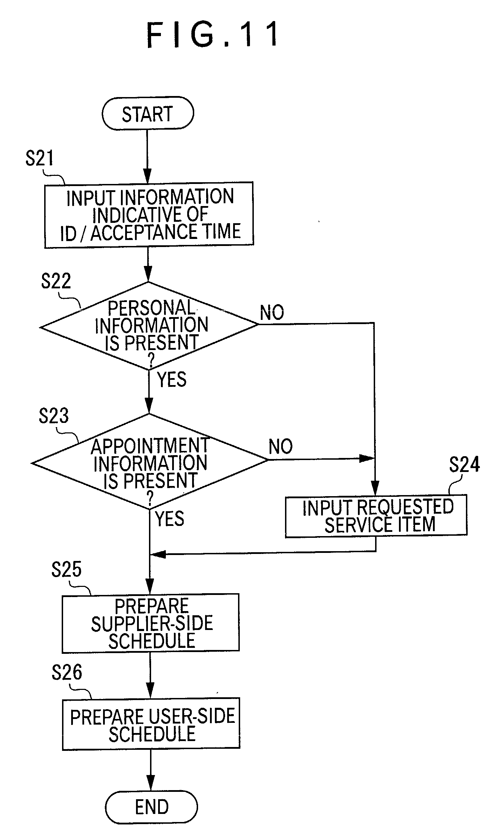

Preparation of supplier-side schedule and user-side schedule is made primarily by the server 31 in accordance with a flow chart shown in FIG. 11.

When information indicative of the ID and the acceptance time outputted from the terminal computer 32 for acceptance is inputted to the server 31 (processing S21), the server 31 gets confirmation as to whether or not personal information is present by performing a search by means of the user information accumulation means 52 to find the personal information including the ID inputted as input information (processing S22).

In the event personal information exists in the user information accumulation means 52, the server 31 gets confirmation as to whether or not appointment information is present in the personal information (processing S23). Note that information is accumulated in the user information accumulation means 52 and the appointment information accumulation means 57 by inputting data through the terminal computer 33 that can be connected to the server 31 via the network 20 (user information accumulation procedure).

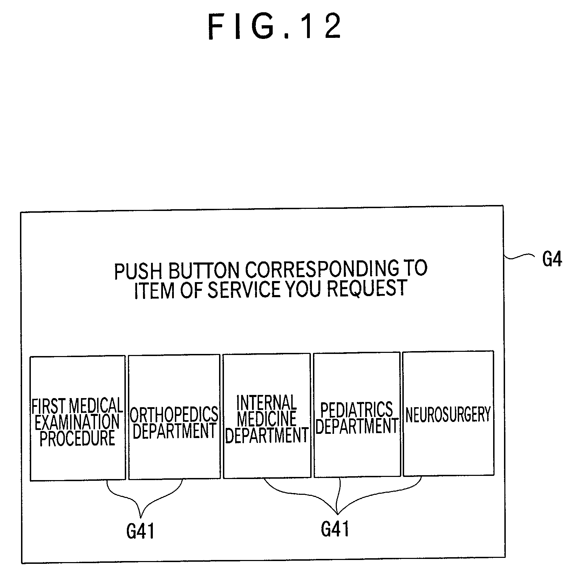

When the server 31 determines that there is no personal information about a user (i.e., in a case where the user is a new patient) or determines that although there is personal information about a user, there is no appointment information thereabout, the server 31 outputs an associated signal to the terminal computer 32 for acceptance and the terminal computer 32 for acceptance displays a screen "G4" shown in FIG. 12 on the monitor thereof to prompt the user to input an item of a service he/she requests. In accordance with the contents displayed on the input screen, the user pushes a service selection button "G41," denoted by "first visit procedure," "orthopedic surgery" or the like, as a service selection operation part and then, the terminal computer 32 for acceptance gets confirmation of the requested service item having been inputted, and further, transmits the information indicative of the requested service item to the server 31 (processing S24: service selection procedure).

When the information indicative of service item has been inputted to the server 31, the server 31 accumulates information indicative of a user name, acceptance time and requested service item as one record including a specific ID in the accepted information accumulation means 51 (acceptance information accumulation procedure) and at the same time, outputs a set of the information to the time schedule preparation section 62.

On the other hand, in a case where the server 31 includes personal information about a user and appointment information therein, the server 31 performs a search by means of the appointment information accumulation means 57 to find the appointment information and gets confirmation thereof, and then, outputs the appointment information along with the ID of the user to the time schedule preparation section 62.

When the above-stated information has been inputted to the time schedule preparation section 62, the section 62 first performs a search to find the table corresponding to the requested service item by means of the supplier-side schedule accumulation means 53. In more detail, for example, in a case where the requested service item is "examination in roentgen room," the table for roentgen room is selected. Subsequently, the time schedule preparation section 62 determines the consultation or examination turn for each user based on the acceptance time or the appointment time for each user accumulated in the accepted information accumulation means 51, and then, determines a consultation/examination time, and further, accumulates in the supplier-side schedule accumulation means 53 information indicative of a user name and the consultation/examination time as one record including a specific ID in the table (processing S25).

After the time schedule preparation section 62 has prepared the supplier-side schedule as described above, the section 62 begins to prepare a user-side schedule corresponding to each user (guidance information preparation procedure). First, the time schedule preparation section 62 prepares tables corresponding to individual users within the user-side schedule accumulation means 54. Secondly, the time schedule preparation section 62 searches a plurality of tables included in the supplier-side schedule accumulation means 53 to find the records associated with specific users and arranges the found records in an empty table within the user-side schedule accumulation means 54 in order of the scheduled times relating to the records and then, accumulates the records in the table (processing S26).

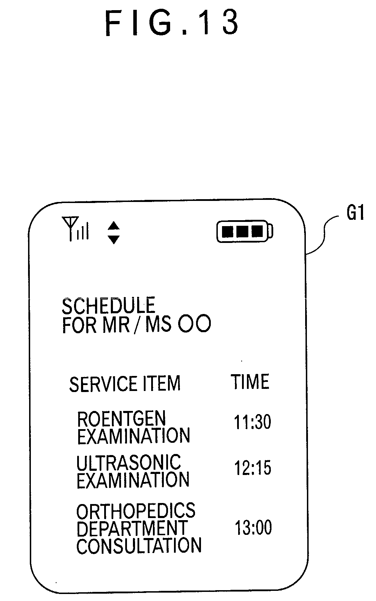

After preparation of the user-side schedule, the user-side schedule is outputted using a radio wave via the delivery information output section 65 from the server 31 to the mobile terminals 11 to 13 each held by the user (delivery procedure for mobile terminal) and a screen "G1" shown in FIG. 13 is displayed as an output of the mobile terminal on the display part of each of the mobile terminals 11 to 13. Note that the mobile terminals 11 to 13 notify the user of reception of the user-side schedule at the time of the reception thereof by using sound or vibration.

The user-side schedule received by the mobile terminals 11 to 13 is stored in a memory of each of the mobile terminals 11 to 13 and thus, can be retrieved therefrom on the display part of each of the mobile terminals 11 to 13 at any time.

### (3) Preparation and delivery of display program (a part of guidance information supply procedure)

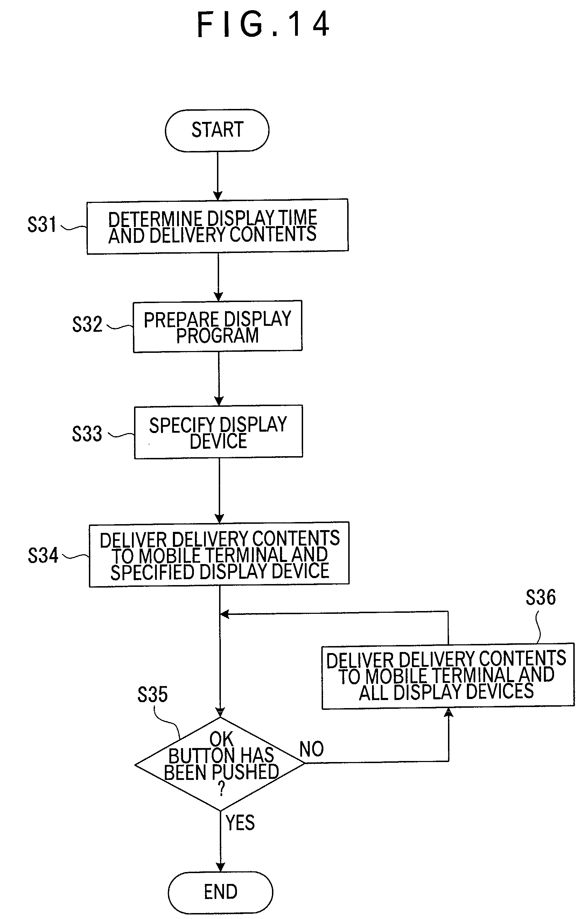

Preparation and delivery of display program also are made primarily by the server 31 in accordance with the flow chart shown in FIG. 14.

As described in the prior description, after the user-side schedule has been accumulated within the user-side schedule accumulation means 54, the schedule is outputted to the display program preparation section 63. In the display program preparation section 63, the delivery contents to be delivered to the display part of each of the mobile terminals 11 to 13, projection systems 37 and image display devices 36 are determined based on the requested service items out of the information indicative of the user-side schedule and then, a display time (delivery time) is determined based on the consultation/examination time (processing S31). This operation prepares records with respect to the individual display times and a display program consisting of a plurality of the records (processing S32: guidance information preparation procedure), and then, accumulates the display program in a table within the display program accumulation means 55.

It should be noted that the display time is determined about 10 minutes earlier than the consultation/examination time and the delivery contents are comprised of text data to be transmitted to the mobile terminals 11 to 13 held by the user at the determined display time and prepared with respect to the requested service items.

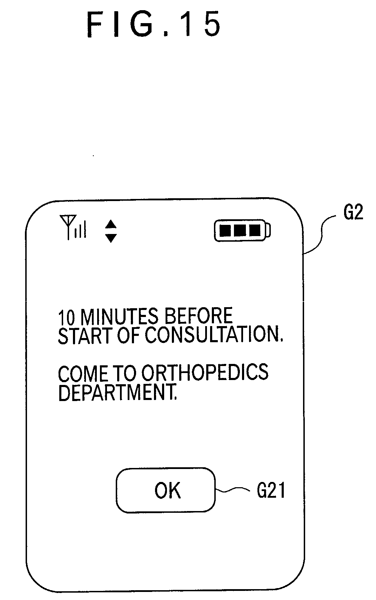

Subsequently, the display program accumulated within the display program accumulation means 55 is outputted to the delivery information output section 65 and then, executed. At the display time when the display program is to be executed, location information collection means 41 collects location information indicative of locations of the mobile terminals 11 to 13 (location information collection procedure) and then, the display device selection section 61 selects the display device disposed in the vicinity of the location of the user (display device selection procedure). Thereafter, the delivery information output section 65 specifies the display device (processing S33) and then, delivers the delivery contents to the specified display device and the mobile terminals 11 to 13 (processing S34: delivery procedure for display device, delivery procedure for mobile terminal). At this time, for example, on the display part of each of the mobile terminals 11 to 13 is displayed a screen "G2" as an output of the mobile terminal to call the user out to a predetermined location, as shown in FIG. 15. Note that the mobile terminals 11 to 13 notify the user of reception of the delivery contents at the time of the reception thereof by using sound or vibration.

Furthermore, the terminal computer 32 for acceptance gets confirmation as to whether or not the user has pushed an OK button "G21" on the screen "G2" after delivery of the contents (processing S35).

In the event the OK button "G21" has not been pushed within about 5 minutes after delivery of the delivery contents, information indicative of the event is outputted from the terminal computer 32 for acceptance and inputted to the delivery information output section 65 of the server 31. Then, the delivery information output section 65 again delivers the delivery contents to the mobile terminals 11 to 13 while delivering the delivery contents to all of the image display devices 36 and the projection systems 37 disposed within the management area (processing S36) and this operation is repeated until the section 65 gets confirmation of completion of operation for pushing the OK button "G21."

In the event the OK button "G21" has been pushed within about 5 minutes after delivery of the delivery contents, information indicative of the event is outputted from the terminal computer 32 for acceptance and then, inputted to the server 31.

### (4) Preparation and delivery of guidance instruction information (a part of guidance information supply procedure)

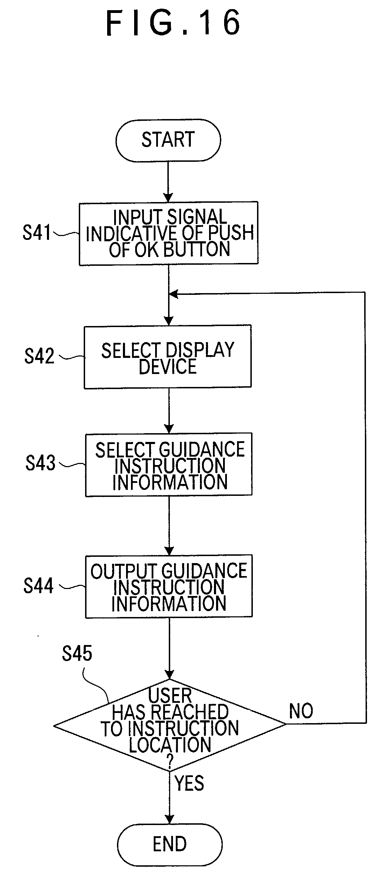

Preparation and delivery of guidance instruction information also are made primarily by the server 31 in accordance with the flow chart shown in FIG. 16.

When the information indicating the OK button "G21" has been pushed is inputted to the server 31 through the terminal computer 32 for acceptance (processing S41), the server 31 outputs text data indicative of beginning of guidance instruction denoted such as by "begin guidance instruction from now on" from the delivery information output section 65 to the mobile terminals 11 to 13 and then, the mobile terminals display the text data on the display parts thereof.

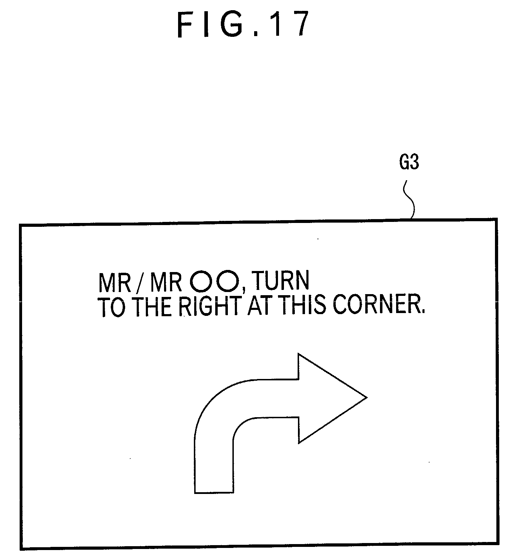

Thereafter, the server 31 selects the display device disposed in the vicinity of the location of the user by means of the display device selection section 61 (processing S42) and prepares guidance instruction information to be transmitted to the display device in the guidance instruction information preparation section 64 (processing S43). The guidance instruction information preparation section 64 specifies the selected display device and retrieves a corresponding table from the guidance instruction information accumulation means 56 by searching the guidance instruction information accumulation means 56 to find the table corresponding to the display device, and then, selects one record corresponding to the requested service item for the user from a plurality of records in the table (guidance information preparation procedure). Subsequently, the guidance instruction information preparation section 64 outputs the delivery contents included in the selected record to the specified display device via the delivery information output section 65 (processing S44: delivery procedure for display device). Then, for example, on the image display device 36 is displayed a screen "G3" shown in FIG. 17 as an output of the device 36. The screen "G3" of FIG. 17 is comprised of displays consisting of text data and an arrow, both of which are omitted from the figure of the delivery contents shown in FIG. 9.

After the server 31 has delivered the delivery contents to the image display device 36, the server collects location information indicative of location of the user by means of the location information collection means 41 and gets confirmation, based on the location information, as to whether or not the user has reached a instruction location (processing S45).

When the server 31 has confirmed that the user has reached the instruction location, in other words, was positioned in the vicinity of the instruction location, the server terminates operation of delivery of the guidance instruction information. On the other hand, when the server has confirmed that the user has not reached the instruction location, in other words, was positioned apart from the instruction location, the server repeats the operations described in the processings S42 through S45 until the server confirms that the user has reached the instruction location.

According to the embodiment described above, the following advantages will be achieved.

That is, in the embodiment, when the user outputs his/her ID to the terminal computer 32 for acceptance through the mobile terminals 11 to 13, the server 31 supplies various guidance information to the user based on the ID and therefore, the user is able to get guidance information indicative of an item of a service he/she requests without, for example, submitting his/her consultation ticket or taking a numbered ticket. This makes it possible to eliminate elaborate task from operation required for the user and establish an advantageous environment under which the user easily enjoys a desired service.

In addition, the guidance information supply system 10 can be constructed at a lower capital cost since the system 10 employs a portable telephone as the mobile terminals 11 to 13, which has already been widely spread all over the world.

In the embodiment, since the display device selection section 61 selects the image display device 36 or the projection system 37, to which guidance information is to be transmitted, based on the location information indicative of the location of a user collected by the location information collection means 41, the guidance information to be supplied to the user can be delivered to the display device that is disposed in the vicinity of the user. This construction allows the user to more securely receive the guidance information.

Since the system 10 directs the image display devices 36 and/or the projection systems 37 to display the guidance instruction information on the display part of each of the devices 36 and the systems 37 to guide the user to move from the location, in which the display device is disposed, to a specific location, the user is able to move in accordance with the guidance instruction information displayed on the display device and reach the specific location, for example, an orthopedic surgery or a roentgen room without getting lost.

Particularly, in the embodiment, since the guidance instruction information employs a display consisting of an arrow other than a display consisting of text data, even a small child or an amblyopic person is able to securely view the guidance instruction information and thereby reach the specific location easily.

In the embodiment, since the guidance information is delivered to both the components, i.e., the image display devices 36/projection systems 37 and the mobile terminals 11 to 13, even in a case where the user is positioned apart from the display device or in a zone that cannot be reached from the display device, the user is able to securely obtain the guidance information. This construction allows the user to securely feel that the guidance information is being supplied to the user even in a case where the spacing between the image display devices 36 and/or the projection systems 37 is made large, thereby enabling to reduce the number of the image display devices 36 and/or the projection systems 37 to be disposed and construct the guidance information supply system 10 at a lower cost.

Furthermore, when the guidance information is inputted to the mobile terminals 11 to 13, the user is informed of the guidance information having been inputted thereto via vibration or sound and therefore, for example, an amblyopic person can be informed via sound, and a vision- or hearing-impaired person or a sleeping person can be informed via vibration, thereby allowing the user to securely be informed of the guidance information.

In the event the user does not detect the call information transmitted to the mobile terminals 11 to 13, the guidance information supply system 10 addresses such undesirable event by employing the following construction of the system. That is, the guidance information is again delivered to the mobile terminals 11 to 13 while being delivered to all of the image display devices 36 and the projection systems 37 disposed within the hospital. Therefore, the user is forced to detect the guidance information having been delivered to the user via both the mobile terminals 11 to 13 and the display devices, i. e., the image display devices 36 and the projection systems 37, thereby allowing the user to securely receive the guidance information.

Since the user-side schedule utilized within the hospital is being delivered to each of the mobile terminals 11 to 13 held by the user, the user is able to efficiently use his/her waiting time in accordance with the schedule.

Since personal information about the users who hold the mobile terminals 11 to 13 is found by searching the user information accumulation means 52 based on the ID of the mobile terminal, which has been accepted by the terminal computer 32 for acceptance, and then, the guidance information to be supplied to the user is prepared based on the personal information, the desirable guidance information corresponding to the individual users can be supplied to the user.

When a screen "G4" is displayed on the monitor of the terminal computer 32 for acceptance to prompt the user to input the item of a service he/she requests and the user pushes a service selection button "G41" on the screen "G4," the user is able to select the service that the user is to receive within the management area and then, the guidance information is supplied to the user based on the selected service item, thereby allowing the user to securely obtain the useful guidance information.

Athough the first embodiment is constructed such that the location information collection means 41, guidance information supply means 42, accepted information accumulation means 51, user information accumulation means 52, supplier-side schedule accumulation means 53, user-side schedule accumulation means 54, display program accumulation means 55, guidance instruction information accumulation means 56 and appointment information accumulation means 57 all are incorporated into one server 31, the present invention is not limited to this construction and therefore, may be constructed such that individual means are incorporated into different servers corresponding to the functions provided by the individual means, whereby an entire system consisting of the different servers and the individual means realizes the functions described in the prior embodiment. Likewise, the display device selection section 61, time schedule preparation section 62, display program preparation section 63, guidance instruction information preparation section 64 and delivery information output section 65, all of which constitute the guidance information supply means 42, may be incorporated into different servers corresponding to the functions provided by the individual sections, whereby an entire system consisting of the different servers and the individual sections realizes the functions described in the prior embodiment.

Furthermore, acquisition of location information indicative of location of a user may be made in the following manner: a plurality of equipments (not limited to a display device) each having a module capable of communicating with the module within each of the mobile terminals 11 to 13 are installed within the management area; and when the mobile terminals 11 to 13 enter the radio-communication-enabled zone that can be reached using a radio wave from any one of those equipments, the equipment covering the associated radio-communication-enabled zone outputs an associated signal ; and thus, the equipment is able to determine whether or not the user is positioned in the vicinity of the equipment that has outputted the signal. Moreover, in a case where those equipments are disposed such that the radio-communication-enabled zones covered by the equipments overlap each other, when the mobile terminals 11 to 13 each are positioned at one location, the mobile terminals each are able to receive signals from a plurality of equipments and then, the location information indicative of location of a user is obtained based on location information indicative of locations of the equipments that have outputted those signals, thereby enabling to obtain the location information indicative of the location of a user with higher accuracy.

Additionally, the management area is not limited to a hospital and therefore, may be applied to a bank, a theme park or the like.

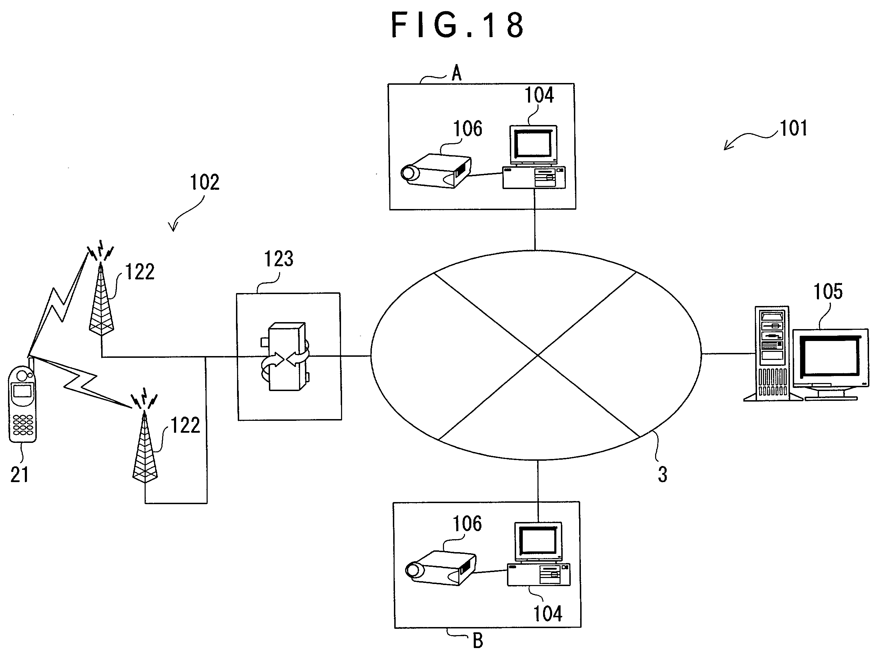

FIG. 18 illustrates a customer management system 101 constructed in accordance with a second embodiment of the present invention.

The customer management system 101 is a system for supplying a service to a customer in such a manner that stores A and B each manage store-utilization records corresponding to the customer by utilizing a portable telephone 121 held by the customer and comprises a mobile communication system 102, a network 103 such as the Internet, store-side terminals 104 installed in the stores A and B and a server 105.

The mobile communication system 102 configured as a packet communication network comprises a portable telephone 121 as a mobile terminal, a base station 122 for receiving a signal transmitted from each portable telephone 121 and a communication center 123 connected to the base station 122 via a dedicated line and provided to accumulate information therein outputted from each portable telephone 121 and assess location information indicative of location of each portable telephone 121 and status of usage of each portable telephone 121.

The communication center 123 manages whole of the mobile communication system 102 and also has a function as a gateway for securing connection with a universal network line such as the Internet.

The portable telephone 121 is a portable telephone having a browsing function capable of displaying a homepage or the like on the Internet on the display part thereof and in more detail, is realized by employing a mobile communication terminal such as i-mode (a trademark of NTT-DoCoMo) and WAP (Wireless Application Protocol), and therefore, it is possible to receive and transmit an email or the like utilizing the portable telephone 121.

In addition, the portable telephone 121 has a communication module capable of receiving and transmitting a radio wave having a predetermined frequency used in a wireless LAN and a utility software for controlling the communication module therein, and within the stores A and B in which a wireless LAN such as Bluetooth (a trademark of Ericsson) or HomeRF (Home Radio Frequency) is installed, the portable telephone can communicate with other devices via the module.

The portable telephone 121 constructed as described above has its own identification information, i. e., an identification (ID) such as a telephone number or a mail address allocated thereto and is configured to communicate with other equipments based on the identification (ID) by using a radio wave.

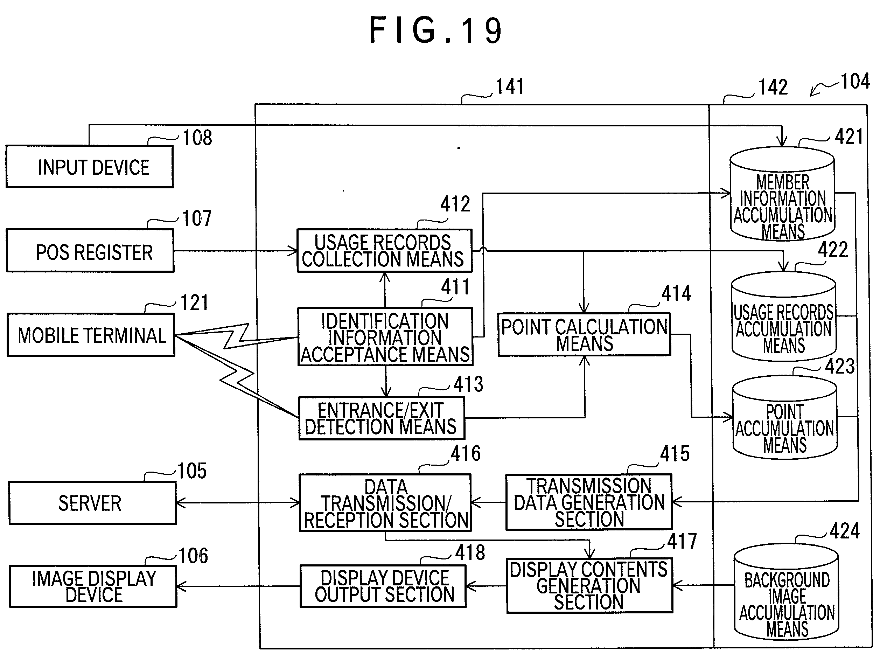

As shown in FIG. 19, the store-side terminal 104 installed in the stores A and B is constructed as a general-purpose computer having a calculation processor 141 and a storage device 142 therein and configured to be able to communicate with a server 105 via a network 103.

The store-side terminal 104 also serves as a server on a LAN installed within the stores A and B, and is configured to be able to transmit data to and receive data from equipments connected to the LAN.

Furthermore, to an image output terminal of the store-side terminal 104 is connected an image display device 106 such as a projector and to a signal input terminal thereof is connected an input device 108 such as a POS register 107 and a keyboard.

In more detail, the store-side terminal 104 comprises identification information acceptance means 411 as a program run on the calculation processor 141, utilization records collection means 412, entrance/exit detection means 413, point calculation means 414, a transmission data generation section 415, a data transmission/reception section 416, a display contents generation section 417 and a display device output section 418, and further, comprises member information accumulation means 421, utilization records accumulation means 422 and point accumulation means, those three means being constructed in a situation where predetermined storage space is reserved in the storage device 142.

The identification information acceptance means 411 is a section for accepting an identification (ID) outputted using a radio wave from the portable telephone 121 and the identification (ID) outputted from the communication module incorporated within the portable telephone 121 is accepted by the identification information acceptance means 411 via a reception antenna mounted inside the stores A and B and constituting the wireless LAN. Note that the identification information acceptance means 411 is configured to accept the identification (ID) of the portable telephone 121 only when a specific operation button of the portable telephone 121 is pushed.

The utilization records collection means 412 is a section for collecting store-utilization records corresponding to the customer based on purchase information supplied from a POS register 107 that is connected to the store-side terminal 104. For example, when the POS register 107 reads a JAN barcode attached to the item that the customer, who has been accepted by the identification information acceptance means 411, wants to purchase, information including an item price and the like recorded as a JAN barcode is collected by the register 107 and then, made associated with the identification (ID) to thereby be collected as the store-utilization records by the utilization records collection means 412.

The entrance/exit detection means 413 is a section for detecting the event indicating that a customer who registered as a member of store has entered the store A or B, or exited therefrom, in more detail, for detecting the event indicating that a customer has entered the store A or B, or exited therefrom depending on whether or not the identification (ID) outputted from the portable telephone held by the user has been detected via the wireless LAN, and thereafter, outputting the time when the customer has entered the store or exited therefrom to the point calculation means 414 that will be described later.

The point calculation means 414 is a section for calculating service points in accordance with the store-utilization records corresponding to the customer who was registered as a member of store and retrieving latest accumulated service points from the later described point accumulation means 423, and in addition, adding the newly calculated service points to the accumulated service points, and further accumulating the new accumulated service points in the point accumulation means 423.

Furthermore, the point calculation means 414 is configured to calculate stay time during which the customer has been staying in the store by using the entrance and exit time detecting means 413 associated with the customer, and then, perform addition of the service points corresponding to the stay time.

The transmission data generation section 415 is a section for generating data to be transmitted to the server 105, in more detail, for generating data based on member information about a member registered in the stores A and B, store-utilization records corresponding to the customer registered as a member of store, service points calculated based on the store-utilization records, and the like.

The data transmission/reception section 416 is a section for receiving delivery data from the server 105 and transmitting data generated by the transmission data generation section 415, and is configured to be able to communicate data with the server 105 by connecting a router, which constitutes the wireless LAN, to the network 103.

The display contents generation section 417 is a section for decorating the guidance information consisting of letter information and delivered from the server 105, and then, generating display contents to be displayed on the image display device 106. Generation of the display contents can be performed by retrieving an image file accumulated in background image accumulation means 424 and further decorating the letter included in the guidance information with the image file as a background. In addition, when needed, the section 417 also is able to generate display contents, which can attract much attention of all viewers, by utilizing animated cartoon or the like.

The display device output section 418 is a section for directing the image display device 106 to display the display contents generated by the display contents generation section 417, in more detail, for generating an image reproduction signal corresponding to the generated display contents and then, outputting the signal to the image display device 106.

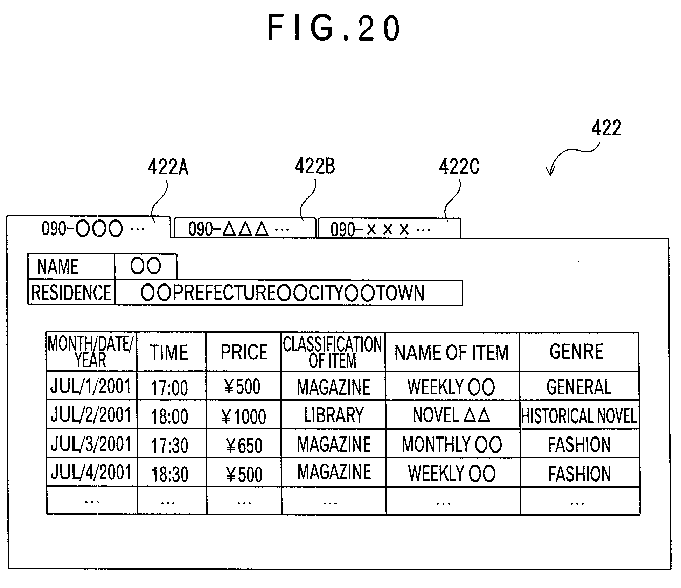

Utilization records accumulation means 422 is a section for accumulating and storing store-utilization records corresponding to the customer registered as a member of store, and as shown in FIG. 20, is configured as a database to have a plurality of tables 422A, 422B, 422C,..., all of which are prepared with respect to the identifications (IDs) of the customers registered as a member of store. In each of the tables 422A, 422B, 422C, ···, is recorded in units of record a purchase history of items that the customer corresponding to the specific identification (ID) purchased and in each record are recorded via the POS register 107 information such as purchase date/time, an amount of money paid for a purchased item, item classification, item name and genre, and in addition, information recorded as a JAN barcode attached to an item.

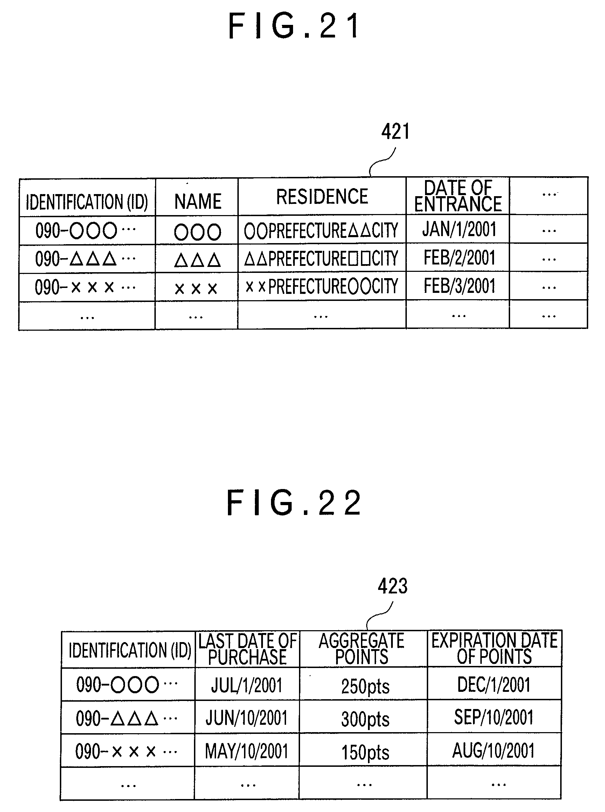

Member information accumulation means 421 is a section for accumulating basic information required when the customer registered as a member of the stores A and/or B and as shown in FIG. 21, is configured to have one table including records in units of record and with respect to the individual customers registered as a member of store, each record including information such as an identification (ID) (identification information: in this case, a phone number of the portable telephone 121), name, residence and admission date as input data. Note that in order for the customer to apply for member registration, the customer may operate his/her own portable telephone 121 to input information necessary for member registration or instead, may directly operate the input device 108 connected to the store-side terminal 104 to input the same.

As described above, the point accumulation means 423 is a section for accumulating the service points calculated by the point calculation means 414 therein and as shown in FIG. 22, recording information such as latest purchase date, aggregate value of points and expiration date of point as one record therein with respect to the identification (ID) corresponding to each customer.

As already described, the background image accumulation means 424 is a section for accumulating data therein indicating the display contents, i. e., the background image, the decorative image and/or the like, generated by the display contents generation section 417 and recording those images as image data or a moving image file.

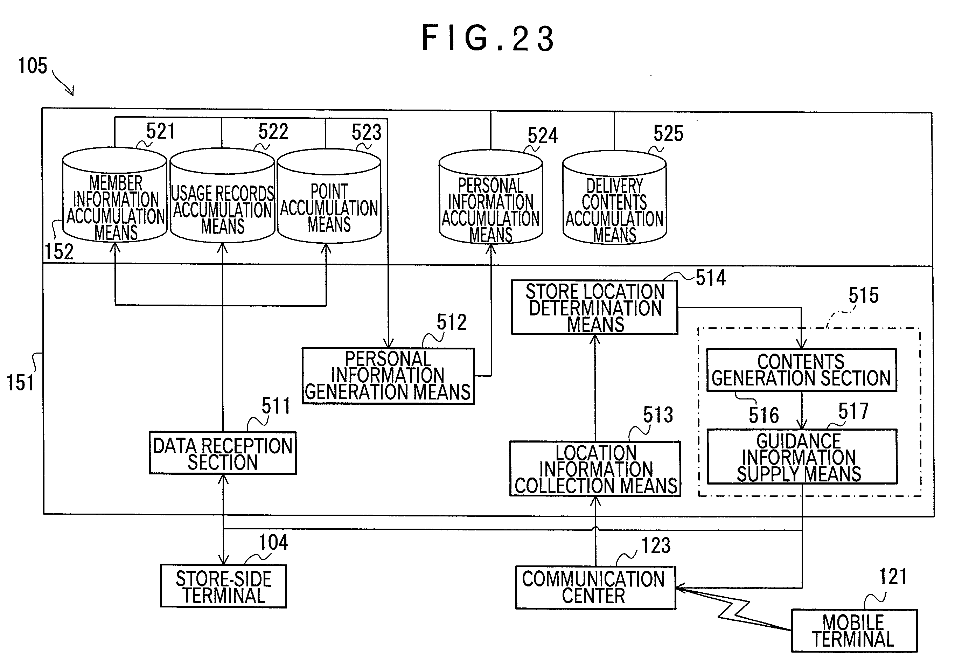

The server 105 is a computer for managing all of the store-side terminals installed in the stores A, B and as shown in FIG. 23, is configured to have a calculation processor 151 and a storage device 152 therein. In more detail, the server 105 is configured to have a data reception section 511, personal information generation means 512, location information collection means 513, store location determination means 514 and a data transmission section 515 therein as programs run on the calculation processor 151, and in addition, have member information accumulation means 521, utilization records accumulation means 522, point accumulation means 523, personal information accumulation means 524 and delivery contents accumulation means 525 therein in a situation where predetermined storage space is reserved in the storage device 152.

The data reception section 511 is a section for receiving data outputted as transmission data from the store-side terminal 104 installed in each of the stores A, B. In more detail, when the information accumulated in the member information accumulation means 421, utilization records accumulation means 422 and point accumulation means 423 of the store-side terminal 104 is outputted from the store-side terminal 104, each of the information is received by the data reception section 511 and then, recorded and stored in the member information accumulation means 521, the utilization records accumulation means 522 and the point accumulation means 523 within the storage device 152. Note that although the number of data transmission from the store-side terminal 104 and the time when the data is transmitted from the store-side terminal 104 are not particularly specified, transmitting data at a frequency of once a day after the closing time for daily operation of the stores A, B makes the member information accumulation means 521, the utilization records accumulation means 522 and the point accumulation means 523 of the server 105 serve as a backup file for the store-side terminal 104.

The personal information generation means 512 is a section for generating personal information with respect to individual customers registered as a member of store and based on the information stored in the member information accumulation means 521, the utilization records accumulation means 522 and the point accumulation means 523, in more detail, for generating information such as customer's birth date obtained from the member information, prediction of customer's hobbies and preferences extracted from his/her store-utilization records and expiration date for use of points obtained from the expiration date of service points. Note that the prediction of customer's hobbies and preferences in a step for generating the personal information is performed in the following manner to increase the degree of accuracy of the prediction. That is, the customer's hobbies and preferences are to be generated in a situation where store-usage information is accumulated to some extent in the utilization records accumulation means 522.

The location information collection means 513 is a section for collecting location information indicative of location of the portable telephone 121 detected by a location information detection system of the mobile communication system 102, in more detail, for collecting location information indicative of location of the customer registered as a member of store such that the communication center 123 is previously informed of the identification (ID) (phone number) of the portable telephone 121 of the customer registered as a member of store and periodically transmits location information indicative of location of the corresponding identification (ID) to the server. Note that data including the location information and transmitted from the communication center 123 is calculated based on information indicative of the latitude and longitude of the base station 122 that receives the identification (ID) of the portable telephone 121 to be detected and the data is transmitted as text data indicating the east longitude and north latitude of the base station 122 in units of degree.

The location information indicative of location of the customer, which location corresponds to the identification (ID) collected by the location information collection means 513, is recorded with respect to the identification (ID) in location information accumulation means (not shown) included in the storage device 152 every time when transmission from the communication center 123 is performed.

The store location determination means 514 is a section for determining whether or not location of the portable telephone 121, which location is based on the location information collected by the location information collection means 513, is positioned in the vicinity of the stores A, B. In more detail, the above-described determination is performed in accordance with the following steps: compare the collected information indicative of the latitude and longitude of the portable telephone 121 with the information indicative of the latitude and longitude of the stores A, B; and when difference between the above-stated two information becomes lower than a specific threshold value, the customer holding the corresponding portable telephone 121 is determined to be positioned in the vicinity of the stores A, B.

Thereafter, when the store location determination means 514 determines that the customer holding the specific identification (ID) is positioned in the vicinity of the stores A, B, the means 514 outputs data indicating the customer is being in the vicinity thereof to the contents generation section 516.

The data transmission section 515 is a section for delivering delivery data generated by the server 105 to the store-side terminal 104 of each of the stores A, B via the network 103 and is configured to have a contents generation section 516 and guidance information supply means 517 therein.

The contents generation section 516 is a section for generating contents to be delivered to the store-side terminal 104 and the contents are generated by combining the information accumulated in the member information accumulation means 521, utilization records accumulation means 522, point accumulation means 523, personal information accumulation means 524 and delivery contents accumulation means 525. Note that the delivery contents generated by the contents generation section 516 are made consisting of a file, which is comprised of full text data or the like and has relatively small capacity, to reduce burden on the communication between the store-side terminal 104 and the server 105.

The guidance information supply means 517 is a section for delivering the contents generated by the contents generation section 516 as guidance information to the store-side terminal 104 of each of the stores A, B, in more detail, for performing delivery of the contents that are to be delivered to the corresponding stores A, B, which delivery is made by receiving a signal as a trigger inputted from the store location determination means 514 to the means 517 via the contents generation section 516.

Furthermore, the guidance information supply means 517 is configured to deliver the contents as contents addressed to the corresponding customer after specifying the customer based on the name or the like of the customer associated with the identification (ID) of the portable telephone 121, thereby completing delivery of the contents generated by the contents generation section 516.

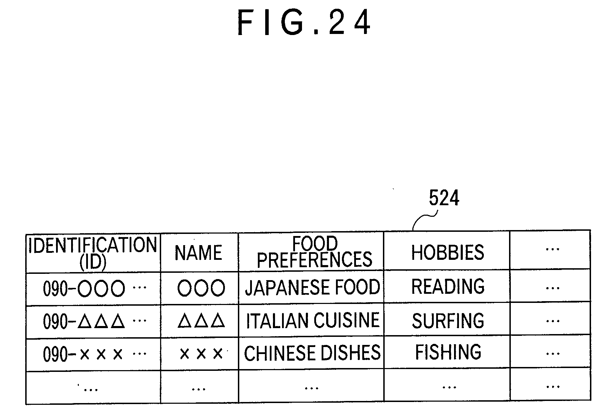

The personal information accumulation means 524 is a section for accumulating the personal information generated by the above-described personal information generation means 512, in more detail, as shown in FIG. 24, a section configured as a database in which customer's hobbies, preferences, birth date and the like corresponding to the identification (ID) are recorded as one record.

In the delivery contents accumulation means 525 are recorded a plurality of document files consisting of standard phrases. The above-stated contents generation section 516 performs a search to find a standard phrase recorded within the delivery contents accumulation means 525 to meet the intended purpose of usage of the contents generated by the section 516 and then, generates the contents by combining the information accumulated in the personal information accumulation means 524 and the found standard phrase.

In the following description, action of the customer management system 101 constructed as described above will be explained. Note that since collection/accumulation of customer's store-utilization records, accumulation of service points performed based on the collection/accumulation, generation/accumulation of personal information and supply of guidance information to a customer each are performed independently of the others, explanation will be made based on flow charts each independent of the others.

### (1) Collection/accumulation of customer's store-utilization records and accumulation of service points.

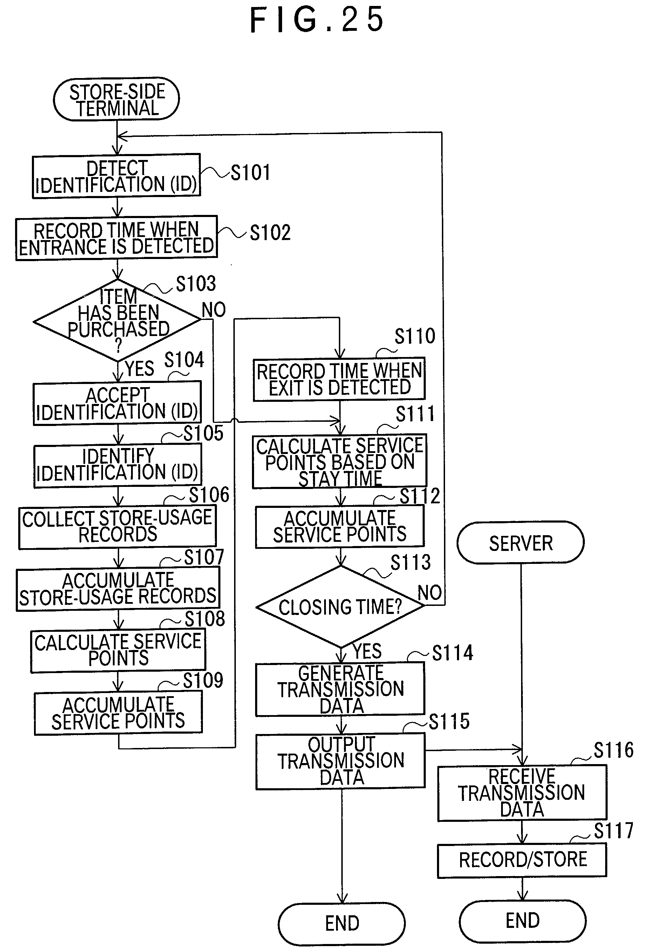

Collection/accumulation of customer's store-utilization records and accumulation of service points are performed in accordance with the flow chart shown in FIG. 25.

First, before utilizing the customer management system 101 of the present invention, the customer, for example, is required to apply for membership in the store A and therefore, when the customer inputs information such as the identification (ID) of the portable telephone 121 held by the customer and applicant's name to the store-side terminal 104, the information is accumulated in the member information accumulation means 421 while the table 422 A is prepared in the utilization records accumulation means 422 for the recording of purchase history corresponding to the identification (ID) of the applicant.

In a situation where the above-stated application for membership is completed, when the customer registered as a member of store enters the store A while turning on the portable telephone 121, the entrance/exit detection means 413 detects the identification (ID) outputted using a radio wave from the portable telephone 121 (processing S101: entrance/exit detection procedure) and then, the time when the identification (ID) has been detected is recorded in a RAM (Random Access Memory) provided in the calculation processor 151 (processing S102).

The identification information acceptance means 411 determines that the customer wants to purchase items or the like when the customer outputs a specific signal to the store-side terminal 104 by operating a predetermined button provided on the portable telephone 121 (processing S103) and then, accepts the identification (ID) of the portable telephone 121 (processing S104: identification information acceptance procedure).

Thereafter, the identification information acceptance means 411 searches and identifies the information accumulated in the member information accumulation means 421 based on the accepted identification (ID) (processing S105) and when information associated with the ID is not found, it would appear, for example, that the expiration date of membership has passed, and therefore, the means 411 terminates the processing and then, prompts the customer to again register as a member of store.

When a clerk of store operates to read the information recorded as a JAN barcode attached to the item by using the POS register 107, the utilization records collection means 412 collects the corresponding information as store-utilization records while associating the identification (ID) accepted according to the identification information acceptance procedure S104 with the information (processing S106: store-utilization records collection procedure).

Subsequently, the utilization records collection means 412 records and stores the collected store-utilization records in the utilization records accumulation means 422 (processing S107: utilization records accumulation procedure) while outputting the store-utilization records to the point calculation means 414.

The point calculation means 414 calculates service points based on the item price recorded as the store-utilization records (processing S108: point calculation procedure) and then, accumulates the calculated service points in the point accumulation means 423 (processing S109: point accumulation procedure).

When the customer exits from the store A and then, the entrance/exit detection means 413 determines that the identification (ID) outputted using a radio wave from the portable telephone 121 is not being detected, the means 413 records the time when the determination has been performed as an exit time in the RAM (processing S110).

The point calculation means 414 calculates stay time during which the customer has been staying in the store based on the entrance/exit time recorded in the RAM (processing S111) and further calculates service points corresponding to the stay time, and then, accumulates the service points in the point accumulation means 423 (processing S112). Note that in the embodiment, as is also shown in the processing S103, the means 414 is configured to calculate service points corresponding to the stay time even when the customer does not purchase an item.

Such collection of the store-utilization records corresponding to the customer who is registered as a member of store is performed repeatedly during operation of the store A and when the store-side terminal 104 identifies the closing time for daily operation of the store A (processing S113), the transmission data generation section 415 generates transmission data by putting the information accumulated in the member information accumulation means 421, utilization records accumulation means 422 and point accumulation means 423 together into data in a specific file form (processing S114) and then, the data transmission/reception section 416 outputs the generated transmission data to the server 105 (processing S115).

The transmission data transmitted from the store-side terminal 104 is accepted by the data reception section 511 in the sever 105(processing S116) and the data reception section 511 records and stores each information included in the transmission data in the information accumulation means 521, utilization records accumulation means 522 and point accumulation means 523 (processing S117).

### (2) Generation/accumulation of personal information.

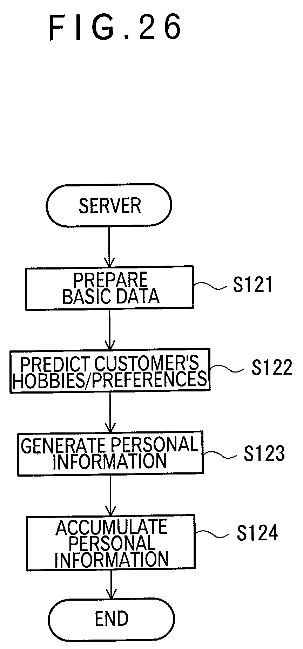

Generation and accumulation of personal information are performed in the server 105 and in more detail, made in accordance with the flow chart shown in FIG. 26.

When the store-utilization records corresponding to the customer who is registered as a member are accumulated to some extent according to the above-stated procedure, the personal information generation means 512 generates personal information.

In more detail, first, the personal information generation means 512 retrieves identification (ID), name, birth date and the like from the member information accumulation means 521, and then, generates basic data indicative of personal information (processing S121).

Thereafter, the personal information generation means 512 searches the utilization records accumulation means 522 to find the table 422A corresponding to the identification (ID) and then, predicts customer's hobbies/preferences based on the item classification, genre and the like selected from the purchase history of the customer (processing S122).

Subsequently, the means 512 generates one record that is constructed by associating information indicative of the predicted customer's hobbies/preferences and the like with the basic data while positioning the identification (ID) as a key item in the table, thereby generating the personal information (processing S123: personal information generation procedure).

Finally, the personal information generation means 512 associates the generated personal information corresponding to each identification (ID) with aggregate points and expiration date of points while positioning the identification (ID) as a key item in the table, and then, accumulates the personal information in the personal information accumulation means 524 (processing S124).

### (3) Supply of guidance information to customer.

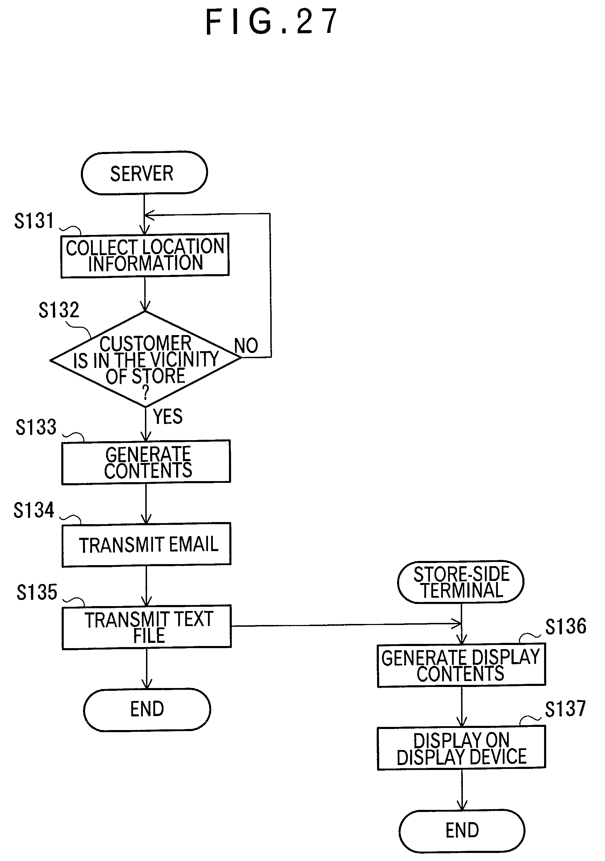

Supply of guidance information to customer is performed in accordance with the flow chart shown in FIG. 27.

First, the location information collection means 513 periodically collects from the communication center 123 the location information indicative of location of the portable telephone 121 corresponding to the identification (ID) accumulated in the member information accumulation means 521 and previously required to be transmitted from the communication center (processing S131: location information collection procedure) and then, accumulates the location information in location information accumulation means, though not shown, with respect to each identification (ID).

The store location determination means 514 determines whether or not the customer holding the portable telephone 121 is positioned in the vicinity of the store A based on the collected location information indicative of location of the portable telephone 121 (processing S132) and when the means 514 determines that the customer is not positioned in the vicinity thereof, the means 514 repeats collection of location information through the location information collection means 513.

On the other hand, when the store location determination means 514 determines that the customer registered as a member of store is positioned in the vicinity thereof, the means 514 outputs data indicating the customer is being in the vicinity thereof to the contents generation section 516.

The contents generation section 516 searches the personal information accumulation means 524 based on the identification (ID) detected in the vicinity of the store A to find information indicative of hobbies/preferences, birth date and the like of the customer corresponding to the identification (ID) and then, generates contents based on the found information and the standard phrase accumulated in the delivery contents accumulation means 525 (processing S133). For example, in a case where the contents generation section 516 is going to give the customer to understand that a new book of a writer who is covered by the prediction of customer's preferences is received by the store A as a result of search of the personal information accumulation means 524, the section 516 generates messages such as "a new book, "titled □ □ □···," attributed to ○ ○ ○ has been received. Purchase it at Book Store A!"

The guidance information supply means 517 generates an email available for communication through the portable telephone 121 based on the generated messages and transmits the email to the portable telephone 121 of the customer via the communication center 123 (processing S134: guidance information supply procedure).

Subsequently, the guidance information supply means 517 generates a text file constructed by adding name of the customer corresponding to the identification (ID) of the portable telephone 121 to which the guidance information has been transmitted, for example, the words "Mr./Mrs.□ □" to the head portion of a message, and then, transmits the text file as an output to the store-side terminal 104 within the store A (processing S135: guidance information supply procedure).

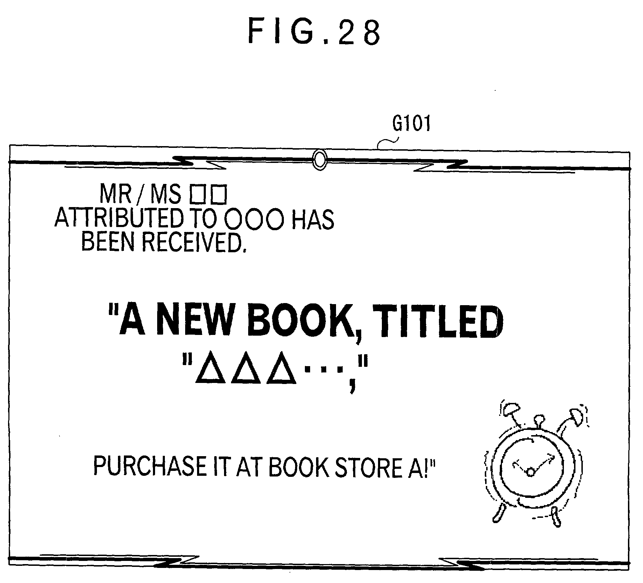

The transmitted text file as an output of the means 517 is received by the data transmission/reception section 416 within the store-side terminal 104 and the display contents generation section 417 generates display contents based on the text information thus received and image information accumulated in the background image accumulation means 424 (processing S136). The display contents can be, for example, as is shown as an example "G101" of display screen of FIG. 28, configured as a screen in which letter information is mixed with background images and when selecting a moving image as a background image, the moving image can be added to the screen (processing S137).

The display contents generated by the display contents generation section 417 are outputted from the display device output section 418 to the image display device 106 and the display contents shown in FIG. 28 are displayed on the screen (processing S137).

The portable telephone 121 that has received the email including the contents delivered from the guidance information supply means 517 informs the customer holding the telephone of reception of the email using vibration, voice or the like of the telephone itself.

The customer who has detected the reception of the email makes sure that the contents obtained via the portable telephone are displayed on the image display device 106 installed in the vicinity of the store A and then, is able to purchase items corresponding to the customer's hobbies/preferences in the store A.

According to the second embodiment constructed as describe above, the following advantages can be obtained.

When the customer holding the portable telephone 121 purchases an item or the like within the store A, the identification information acceptance means 411 accepts the identification (ID) inherent to the customer and then, the utilization records collection means 412 collects store-utilization records such as price of the item purchased by the customer, and thereafter, the utilization records accumulation means 422 is able to accumulate the store-utilization records therein corresponding to the identification (ID) of the customer.

The above-described operation makes it possible to collect/accumulate the store-utilization records corresponding to the customer without issuance of a member card by the store A and supply various services to the customer depending on the requests from the customer based on the accumulated store-utilization records corresponding to individual customers, and accordingly, the store A is able to position itself apart from other stores.

On the other hand, when the customer is going to purchase an item or the like, the customer is not required to bring member cards corresponding to stores A, B with him/her but has only to bring a portable telephone with him/her, thereby allowing the stores A, B each to accumulate the utilization records and further permitting the customer to securely enjoy services supplied by the store A.

Furthermore, since the customer management system 101 has the entrance/exit detection means 413 therein and is constructed such that the point calculation means 414 performs addition of service points in proportion to stay time associated with the customer within the store A, which stay time can be obtained from the entrance/exit detection means 413, in a case where the store has a parking lot or the like installed therein, the store is able to supply a service in such a manner that associated parking fee is made free by offsetting service points accumulated during usage of store against points corresponding to the fee, thereby allowing the store to position itself apart from other stores and further enhance its ability to pull in more customers.

Additionally, since the customer management system 101 has the location information collection means 513 and the guidance information supply means 517 therein, the associated store is able to individually and timely supply contents as guidance information to the customer registered as a member of store by utilizing an email or the image display device 106 installed in the store A, thereby allowing for increase in frequency of store-utilization by the customer.

Moreover, since the customer management system 101 has the personal information generation means 512 therein, a predetermined customer specified by the location information collection means 513 can be supplied with guidance information corresponding to the customer's hobbies and preferences with pinpoint accuracy through an email and/or the image display device 106. In addition, since the customer is provided only with desired information in which the customer is interested, the customer never is given a large amount of unnecessary information nor misses the desired information.

In addition, the guidance information supply means 517 is configured to make the image display device 106 display the delivery contents and even information, which is included in an email received by the portable telephone 121 and difficult for the customer to understand, can clearly be displayed on a large screen of the image display device 106, thereby allowing the store A to further prompt customers to enter the store A and enhance its ability to pull in more customers.

Moreover, the entrance/exit detection procedure S101, identification information acceptance procedure S104, store-utilization records collection procedure S106, utilization records accumulation procedure S107, point calculation procedure S108, point accumulation procedure S109, personal information generation procedure S123, location information collection procedure S131 and guidance information supply procedures S134, S135 each are configured as a program to be able to run on the computer and therefore, the above-described customer management system 101 is able to perform its management using a general-purpose computer, thereby enhancing the versatility of the customer management system 101 to a large extent.

In the above-stated second embodiment, although the customer management system 101 is constructed such that the means constituting the customer management system 101 each are separately disposed in the store-side terminal 104 and the server 105, the construction of the customer management system of the present invention is not limited to the aforementioned construction.

That is, all of the means are centrally disposed in the store-side terminal 104 and the customer management system 101 is constructed within a wireless LAN.

Furthermore, in the above-described embodiment, although the customer management system 101 is constructed such that the identification information for identifying the portable telephone 121 is detected via the wireless LAN within the stores A, B and the location information indicative of location of the portable telephone 121 is collected outside the stores A, B via the mobile communication system 102, the construction of the customer management system of the present invention is not limited to the aforementioned construction.

That is, employing a mobile terminal such as a PHS, to which the transmission/reception method and location information determination method similar to those employed in the embodiments are applicable inside and outside the store, in the customer management system allows the system not to take the trouble to change its communication method inside and outside the store.

Additionally, although the above-described second embodiment is configured as the customer management system applied to the store in which an item or the like is sold, the present invention is not limited to such second embodiment and therefore, a game hall such as a pachinko parlor, a bowling alley and the like can employ the customer management system of the present invention in a case where the game hall is required to prompt its customers to register as a member of game hall and accumulate store-utilization records corresponding to the customers therein.

## Claims

1. A guidance information supply system for supplying guidance information to a user by utilizing at least one display device installed within a management area, said system comprising:
a mobile terminal held by said user for outputting identification information for identifying said user by using a radio wave;
acceptance means for accepting said identification information outputted using a radio wave from said mobile terminal held by said user;
accepted information accumulation means for accumulating said identification information accepted by said acceptance means; and
guidance information supply means for supplying guidance information to be delivered to said user to said at least one display device based on said identification information accumulated in said accepted information accumulation means.

2. The guidance information supply system according to claim 1 further comprising location information collection means for collecting location information indicative of location of the mobile terminal held by the user, wherein a plurality of said display devices are installed in said management area and said guidance information supply means includes:
a display device selection section for selecting at least one display device, adapted to receive said guidance information to be delivered, from a said plurality of display devices based on location information indicative of location of said mobile terminal held by said user, said location information being collected in accordance with said location information collection means; and
a delivery information output section for delivering said guidance information to said at least one display device selected by said display device selection section.

3. The guidance information supply system according to claim 2, wherein said guidance information transmitted to said specific display device is guidance instruction information to guide said user to move from a location of said display device to a predetermined location.

4. The guidance information supply system according to any one of claims 1 to 3, wherein said guidance information supply means has a delivery information output section therein for delivering said guidance information to said mobile terminal held by said user and said mobile terminal has notification means therein for notifying said user of acquisition of said guidance information outputted from said delivery information output section.

5. The guidance information supply system according to claim 4, wherein said guidance information supply means is configured to again deliver guidance information to said mobile terminal held by said user and further, deliver guidance information to nearly all of said plurality of said display devices in the event said user has not responded to said guidance information transmitted to said mobile terminal.

6. The guidance information supply system according to any one of claims 4 and 5, wherein said guidance information transmitted to said mobile terminal is a schedule for said user and available within said management area.

7. The guidance information supply system according to any one of claims 1 to 6 further comprising user information accumulation means for accumulating personal information about said user, wherein said user information accumulation means has a guidance information preparation section therein for searching said user information accumulation means to find personal information about said user having said identification information based on said identification information accepted by said acceptance means and preparing guidance information to be transmitted to said display device and/or said mobile terminal based on said found personal information.

8. The guidance information supply system according to any one of claims 1 to 7, wherein said acceptance means has a service selection operation section therein available to said user for selecting an item of a service to be received by said user within said management area and said guidance information preparation section prepares guidance information to be transmitted to said display device and/or said mobile terminal based on said item of a service selected by said user through said service selection operation section.

9. A guidance information supply method for supplying guidance information to a user by utilizing at least one display device installed within a management area, said method comprising:
an acceptance procedure for accepting identification information outputted using a radio wave from a mobile terminal held by said user and adapted to output identification information for identifying said user by using a radio wave;
an accepted information accumulation procedure for accumulating identification information accepted by said acceptance means; and
a guidance information supply procedure for supplying guidance information to be delivered to said user to a display device based on identification information accumulated in accordance with said accepted information accumulation procedure.

10. The guidance information supply method according to claim 9 further comprising a location information collection procedure for collecting location information indicative of location of said mobile terminal held by said user, wherein said guidance information supply procedure including:
a display device selection procedure for selecting at least one display device, adapted to receive said guidance information to be delivered, from a plurality of display devices based on location information indicative of location of said mobile terminal held by said user, said location information being collected in accordance with said location information collection procedure; and
a delivery procedure for display device, said procedure being adapted to deliver said guidance information to said at least one display device selected in accordance with said display device selection procedure.

11. The guidance information supply method according to claim 10, wherein said guidance information transmitted to said at least one display device in accordance with said delivery procedure for display device is guidance instruction information used to guide said user to move from a location of said at least one display device to a specific location.

12. The guidance information supply method according to any one of claims 9 to 11, wherein said guidance information supply procedure comprises a delivery procedure for mobile terminal, said procedure being adapted to deliver said guidance information to said mobile terminal held by said user, and said mobile terminal informs said user of acquisition of said guidance information delivered in accordance with said delivery procedure for mobile terminal in the event said mobile terminal receives said guidance information.

13. The guidance information supply method according to claim 12, wherein said guidance information supply procedure is constructed such that in the event said user has not responded to said guidance information transmitted to said mobile terminal, guidance information is again transmitted to said mobile terminal held by said user and further, guidance information is delivered to nearly all of said plurality of display devices.

14. The guidance information supply method according to one of claims 12 and 13, wherein guidance information transmitted to said mobile terminal in accordance with said delivery procedure for mobile terminal is a schedule for said user and available within said management area.

15. The guidance information supply method according to any one of claims 9 to 14 further comprising a user information accumulation procedure for accumulating personal information about a plurality of users, wherein said guidance information supply procedure has a guidance information preparation procedure therein for searching personal information about said plurality of users accumulated in accordance with said user information accumulation procedure to find personal information about a user having said identification information based on identification information accepted in accordance with said acceptance procedure and preparing guidance information to be transmitted to said at least one display device and/or said mobile terminal based on said found personal information.

16. The guidance information supply method according to any one of claims 9 to 15 further comprising a service selection procedure available to said user for selecting at least one item of a service to be received by said user within said management area, wherein guidance information to be transmitted to said at least one display device and/or said mobile terminal is prepared based on said at least one item of a service, said at least one item of a service being selected in accordance with said service selection procedure, in said guidance information preparation procedure.

17. A program adapted to implement said guidance information supply method described in any one of claims 9 to 16.

18. A customer management system for supplying a service. to a customer by managing store-utilization records corresponding to said customer registered as a member of store, said system comprising:
identification information acceptance means for accepting identification information for identifying said customer and outputted using a radio wave from a mobile terminal held by said customer;
utilization records collection means for collecting store-utilization records corresponding to said customer accepted by said identification information acceptance means; and
utilization records accumulation means for accumulating said store-utilization records corresponding to said identification information for identifying said customer.

19. The customer management system according to claim 18 further comprising:
point calculation means for calculating service points corresponding to said customer based on said store-utilization records corresponding to said customer; and
point accumulation means for accumulating said service points calculated by said point calculation means.

20. The customer management system according to claim 19 further comprising entrance/exit detection means for detecting each of events indicating said customer has entered and exited from a store, wherein said point calculation means is further configured to calculate service points in proportion to stay time between two events indicating said customer enters and then exits from a store.

21. The customer management system according to any one of claims 18 to 20 further comprising:
location information collection means for collecting location information indicative of location of said mobile terminal held by said customer; and
guidance information supply means for supplying guidance information to said mobile terminal held by said customer based on said location information indicative of location of said mobile terminal and collected by said location information collection means.

22. The customer management system according to claim 21 further comprising personal information generation means for generating personal information about said customer corresponding to said identification information based on information indicative of said store-utilization records accumulated in said utilization records accumulation means, wherein said guidance information supply means generates said guidance information based on said personal information about said customer generated by said personal information generation means.

23. The customer management system according to any one of claims 21 and 22 further comprising at least one display device adapted to display said guidance information and installed within said store, wherein said guidance information supply means is further configured to deliver said guidance information to at least one of said at least one display device.

24. The customer management system according to claim 23, wherein said guidance information supply means specifies a customer holding said mobile terminal based on said identification information for identifying said mobile terminal provided with said guidance information and then, directs said at least one of said at least one display device to display said guidance information.

25. A customer management method for managing store-utilization records corresponding to a customer registered as a member of store by using a computer, thereby supplying a service to said customer, said method comprising:
an identification information acceptance procedure for accepting identification information for identifying said customer and outputted using a radio wave from a mobile terminal held by said customer;
a utilization records collection procedure for collecting store-utilization records corresponding to a customer accepted by said identification information acceptance means by using a computer; and
a utilization records accumulation procedure for accumulating store-utilization records corresponding to said identification information for identifying said customer by using a computer.

26. The customer management method according to claim 25 further comprising:
a point calculation procedure for calculating service points corresponding to said customer based on store-utilization records corresponding to said customer by using a computer; and
a point accumulation procedure for accumulating said service points calculated in accordance with said point calculation procedure by using a computer.

27. The customer management method according to claim 26 further comprising an entrance/exit detection procedure for detecting each of events indicating said customer has entered and exited from a store by using a computer, wherein said point calculation procedure is further configured to calculate service points in proportion to stay time between two events indicating said customer enters and then exits from a store.

28. The customer management method according to any one of claims 25 to 27 further comprising:
a location information collection procedure for collecting location information indicative of location of said mobile terminal held by said customer by using a computer; and
a guidance information supply procedure for supplying guidance information to said mobile terminal held by said customer by using a computer based on said location information indicative of location of said mobile terminal and collected in accordance with said location information collection procedure.

29. The customer management method according to claim 28 further comprising a personal information generation procedure for generating personal information about a customer corresponding to said identification information by using a computer based on information indicative of store-utilization records accumulated in accordance with said utilization records accumulation procedure, wherein said guidance information supply procedure generates said guidance information based on said personal information about said customer generated in accordance with said personal information generation procedure.

30. The customer management method according to any one of claims 28 and 29, wherein said guidance information supply procedure is further configured to deliver said guidance information to at least one of said one display device installed within said store.

31. The customer management method according to claim 30, wherein said guidance information supply procedure specifies a customer having a mobile terminal based on identification information for identifying said mobile terminal provided with said guidance information and then, directs said at least one of said at least one display device to display said guidance information thereon.

32. A program for directing a computer to implement said customer management method described in any one of claims 25 to 31.
